# EUROPEAN PATENT SPECIFICATION

(11) **EP 3 524 220 B1**
(45) Date of publication and mention of the grant of the patent: **31.03.2021**
(21) Application number: 19156653.8
(22) Date of filing: 12.02.2019
(51) Int. Cl.: A61H 1/02, A61H 3/00, A61H 3/04

(54) **ADAPTIVE ASSISTIVE AND/OR REHABILITATIVE DEVICE AND SYSTEM**
ADAPTIVE UNTERSTÜTZENDE UND/ODER REHABILITATIVE VORRICHTUNG UND SYSTEM
DISPOSITIF ET SYSTÈME D'ASSISTANCE ADAPTATIVE ET/OU DE RÉADAPTATION

(30) Priority: 13.02.2018 KR 20180017903; 20.02.2018 KR 20180019996; 22.02.2018 KR 20180021365; 22.02.2018 KR 20180021367; 15.03.2018 KR 20180030458; 12.06.2018 KR 20180067691; 12.06.2018 KR 20180067692; 12.06.2018 KR 20180067693; 12.06.2018 KR 20180067694; 12.09.2018 US 201862730399 P; 12.09.2018 US 201862730400 P; 12.09.2018 US 201862730412 P; 12.09.2018 US 201862730420 P
(43) Date of publication of application: 14.08.2019
(73) Proprietor: LG Electronics Inc., Seoul 07336 (KR)
(72) Inventor: PARK, Kyu Tae, 08592 Seoul (KR); NAM, Bohyun, 08592 Seoul (KR); SON, Jung Kyu, 08592 Seoul (KR); YU, Seonil, 08592 Seoul (KR); LEE, Wonjun, 08592 Seoul (KR)
(74) Representative: Vossius & Partner Patentanwälte Rechtsanwälte mbB

(56) References cited:
- KR-B1- 101 788 567
- US-A1- 2007 194 547
- US-B1- 6 607 202

## Description

This application relates to an adaptive assistive and/or rehabilitation device.

Various types of wearable assistive devices may be used to assist in rehabilitation of those who may not be able to walk as well as others. The wearable device may assist a user's upper and/or lower body so that the user does not have to bear the burden of moving their entire body weight. However, such wearable devices are heavy, often weighing tens of kilograms (or scores of pounds). Since the wearable device is cost prohibitive, a person desiring to use the wearable device usually sets up an appointment at a rehabilitation center or other facility that houses wearable devices.

Once at the facility, multiple employees and/or assistants may be required to transport the heavy wearable devices from a storage location to a rehabilitation area, assist the user in a donning of the wearable device, and assist the user in the rehabilitation process. These wearable devices may require a large storage space, and a significant amount of time may be required for multiple assistants to transport the heavy wearable devices to the user and put them on. Due to a significant time wasted on transport and donning of the wearable device, the time for a user to use the device is severely limited due to time restrictions of appointments generally set by the insurance company.

Various devices that may assist with walking are disclosed in Korean Patent Registration Publication No. 10-1517292 registered on April 27, 2015 (FIGS. 1 and 2), which discloses a wheelchair and a walker, Korean Patent Registration No. 10-1536586 registered on July 8, 2015 (FIG. 3), which discloses a wheelchair with a tilting seat having a boarding apparatus and a thin handle, US Patent Publication No. 2017-0071812 published on March 16, 2017 (FIGS. 4 and 5), which discloses a boarding apparatus on a supporter that must be stored in a seated position, U.S. Patent Publication No. 2009-0278325 published on November 12, 2009 (FIG. 6) and Korean Patent Publication No. 2011-0107052 published on September 30, 2011 (FIG. 7), which disclose walkers, and Korean Patent Laid-Open Publication No. 2004-0089036 and Korean Utility Registration No. 20-0428127, which disclose conventional handle fixing structures. An example of a conventional wearable robot is disclosed in Korean Patent No. 10-1433284 registered on August 18, 2014.

The related art is problematic in that these devices require a significant storage space, may not provide powering and charging methods, require significant manpower to transport them and to don the wearable device, and require close supervision throughout the preparation and the rehabilitation process. The related art is also not very supportive, and the walkers and/or wearable devices may be hard for an assistant of the user to control or steer quickly in an urgent situation.

Further, the above prior art is generally not intended for use with a wearable assistive device, and generally designed to have a single function unrelated to a wearable assistive device.

US 6 607 202 B1 discloses a device according to the preamble of claim 1. It specifically discloses an orthotic walker comprising an orthosis mounted on a wheeled frame.

To solve the above-identified problems of the prior art, the invention as defined by the appended claims are presented in this application.

According to the invention, an adaptive assistive and/or rehabilitation device as defined in claim 1 is provided.

Preferably, the base frame may have a U-shape that opens in the user side, and the sub-frame may have a U-shape smaller than the U-shape of the base frame and opens in the assistant side.

According to the invention, the adaptive assistive and/or rehabilitation device includes a lower housing provided in the lower support, wherein the lower housing is coupled to the base frame and the sub-frame to support the base frame and the sub-frame.

Preferably, the base frame and the sub-frame may be arranged to extend downward toward a floor surface, and wherein a center of the base frame is coupled to the lower housing at a position higher than a position where the sub-frame is coupled to the lower housing.

Preferably, at least one wheel may be installed at each of first and second ends of the base frame and the sub-frame, and the wheel coupled to the sub-frame may be larger than the wheel coupled to the base frame.

According to the invention, the lower housing may include: an outer shell through which the base frame and the sub-frame are inserted, an inner shell provided inside of the outer shell to which the base frame and the sub-frame are coupled, and a balance weight provided inside of the outer shell and arranged below , inside or surrounding the inner shell to add weight to the lower support.

Preferably, the upper support may include a handle for a user.

Preferably, the width of first and second ends of the sub-frame may be smaller than the width of first and second ends of the base frame.

Preferably, the adaptive assistive and/or rehabilitation device may further comprise a drive assembly supporting the upper support and configured to raise and lower the upper support, wherein the lower housing is coupled to a lower side of the drive assembly to support the upper support and the driving assembly.

Preferably, first and second centers of the U-shapes of the base frame and sub-frame, respectively, may be coupled to the lower housing, and the second center of the U-shape of the sub-frame may be positioned between the first center of the U-shape of the base frame and the balance weight.

Preferably, the base frame may include first and second extensions to form the U-shape, the first extension of the base frame may be coupled to a third side of the lower housing, and the second extension of the base frame may be coupled to a fourth side of the lower housing.

Preferably, the sub-frame may include first and second extensions to form the U-shape, wherein the first extension of the sub-frame may be coupled to the third side of the lower housing at a position lower than where the first extension of the base frame is coupled, and the second extension of the sub-frame may be coupled to the fourth side of the lower housing at a position lower than where the second extension of the base frame is coupled.

Preferably, the lower housing may include first and second top grooves and first and second bottom grooves, wherein the first and second extensions of the base frame may be coupled to the first and second top grooves, and the first and second extensions of the sub-frame may be coupled to the first and second bottom grooves.

Preferably, the first extensions of the base frame and the sub-frame each have first ends, the second extensions of the base frame and the sub-frame each have second ends, wherein wheels are provided on the first and second ends of the base frame and the sub-frame, and wherein the wheels provided on the first and second ends of the sub-frame are heavier than the wheels provided on the first and second ends of the base frame.

In the present invention, there is also provided an assistive and/or rehabilitative system comprising an adaptive assistive and/or rehabilitative device as described in the present disclosure, and a wearable assistive device supported by the adaptive assistive and/or rehabilitative device.

The embodiments will be described in detail with reference to the following drawings in which like reference numerals refer to like elements wherein:

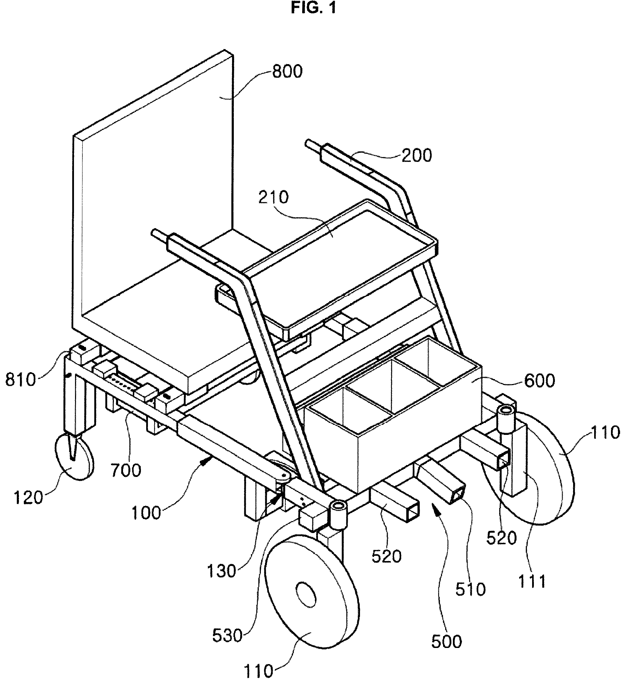

FIG. 1 is a perspective view of a walking assistant apparatus with a boarding chair according to prior art;

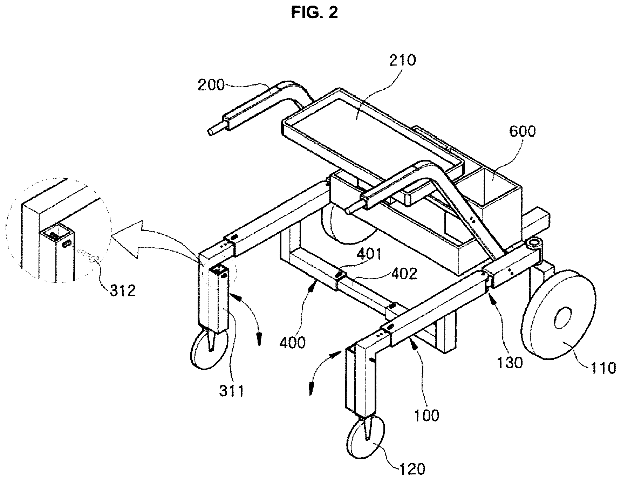

FIG. 2 is a perspective view in which a walking assistant apparatus and boarding chair are separated according to prior art;

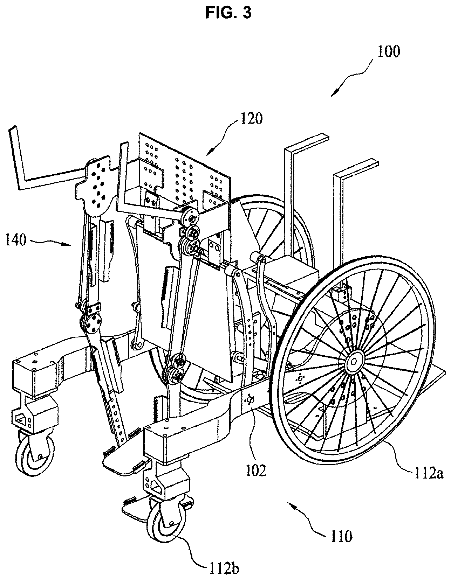

FIG. 3 is a perspective view showing a wheelchair having a tilting seat according to prior art;

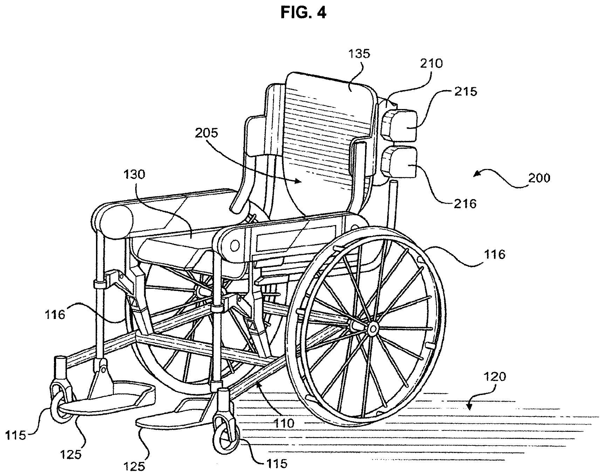

FIG. 4 is a perspective view showing an exoskeleton moving apparatus according to prior art;

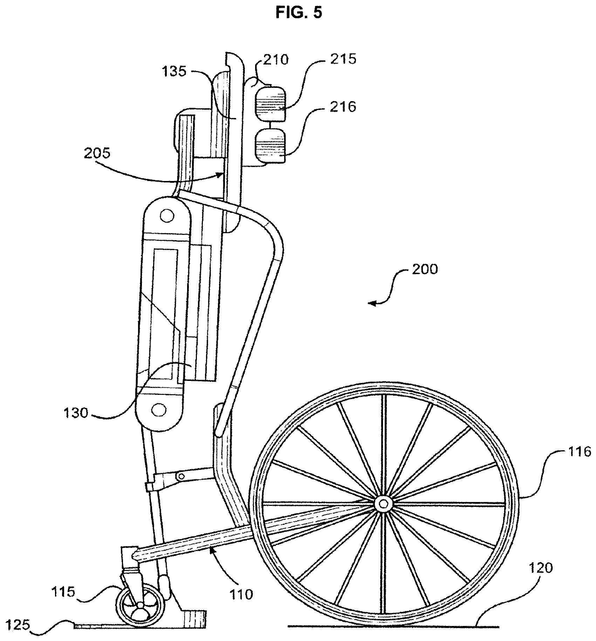

FIG. 5 is a side view showing the exoskeleton moving apparatus of FIG. 4;

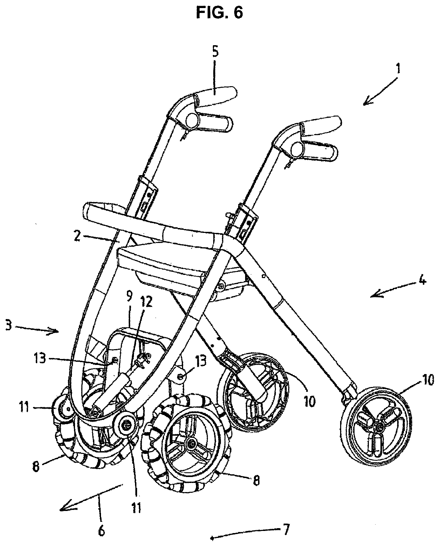

FIG. 6 is a perspective view showing a walking assistant apparatus according to prior art;

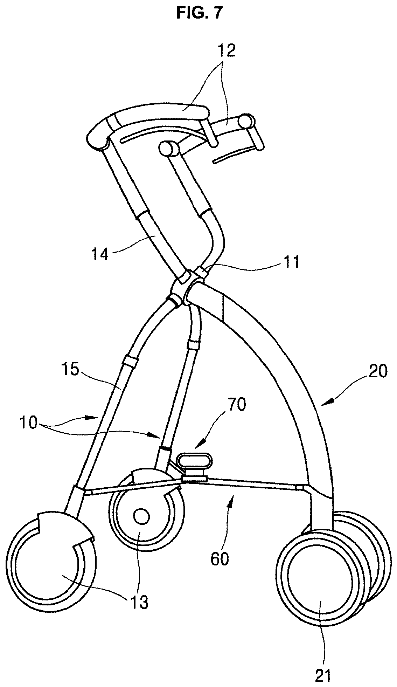

FIG. 7 is a perspective view showing a support apparatus according to prior art;

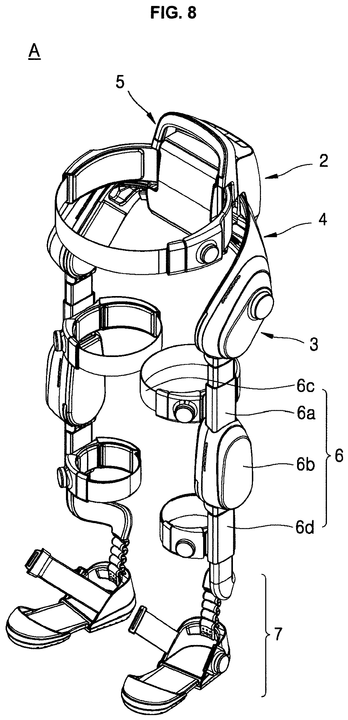

FIG. 8 is a perspective view of a wearable device to be coupled to an adaptive assistive and/or rehabilitative device according to an embodiment;

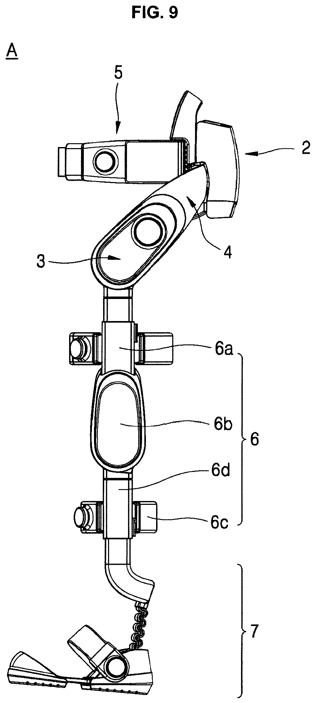

FIG. 9 is a side view of the wearable device of Figure 8;

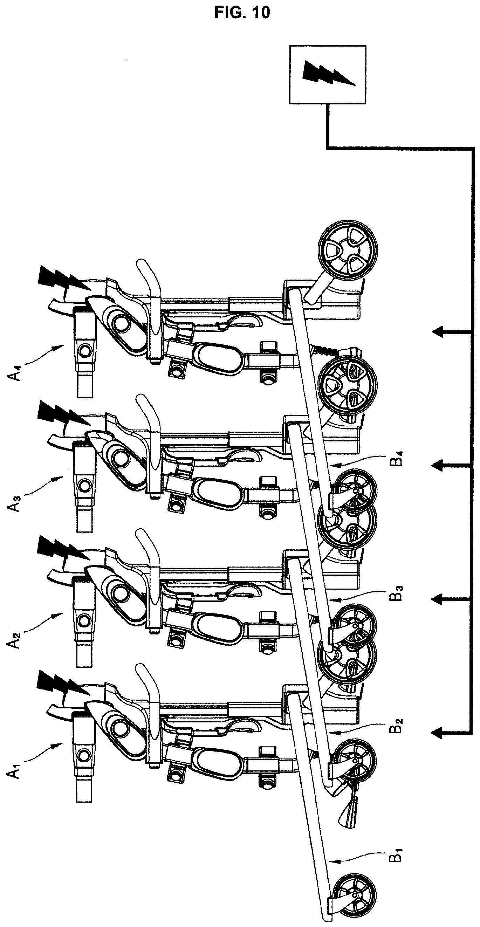

FIG. 10 is a view exemplifying a storage and/or charging state of multiple adaptive assistive and/or rehabilitative device systems, each including a wearable assistive device coupled to an adaptive assistive and/or rehabilitative device in a standing state, according an embodiment;

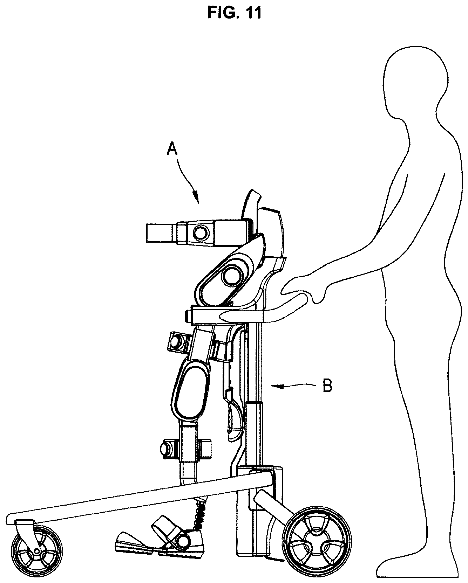

FIG. 11 is a view exemplifying a transport state of an adaptive assistive and/or rehabilitative device system, including a wearable assistive device coupled to an adaptive assistive and/or rehabilitative device in a standing state, according to an embodiment where an assistant transports the adaptive assistive and/or rehabilitative device system;

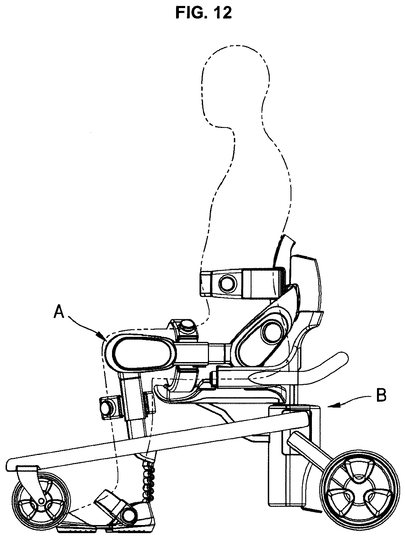

FIG. 12 is a view exemplifying a donning or chair state of adaptive assistive and/or rehabilitative device system, including a wearable assistive device and an adaptive assistive and/or rehabilitative device (AARD) in a seated state, according to an embodiment where a user sits in the AARD and decouples the wearable assistive device from the AARD, or couples the wearable assistive device back to the AARD after taking off the wearable assistive device;

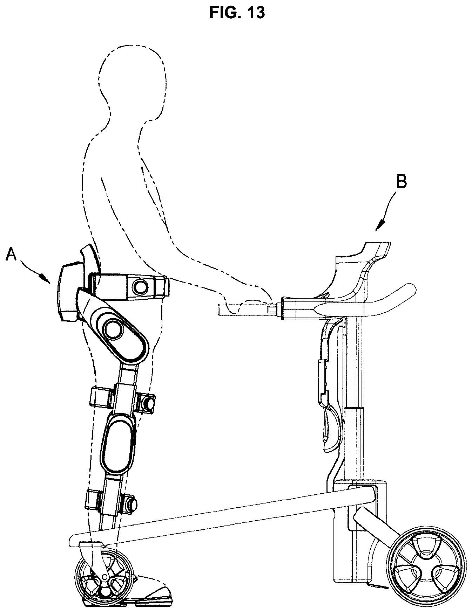

FIG. 13 is a view exemplifying a walker state of an adaptive assistive and/or rehabilitative device system, including a wearable assistive device worn by a user and an adaptive assistive and/or rehabilitative device in a standing state, according to an embodiment;

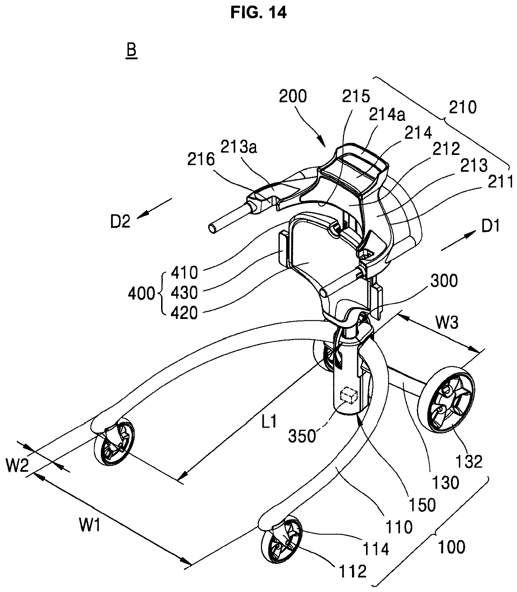

FIG. 14 is a perspective view of an adaptive assistive and/or rehabilitative device according to an embodiment;

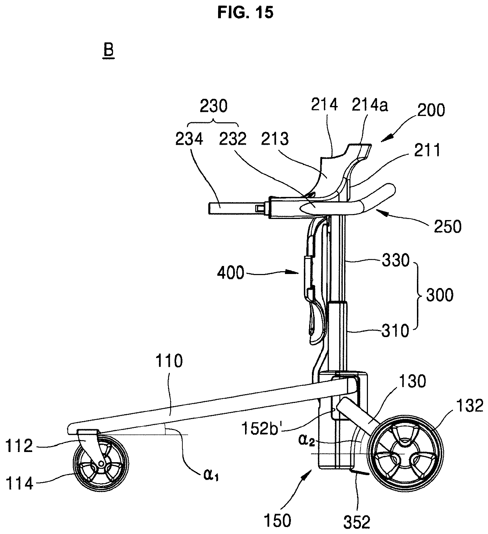

FIG. 15 is a side view of an adaptive assistive and/or rehabilitative device according to an embodiment;

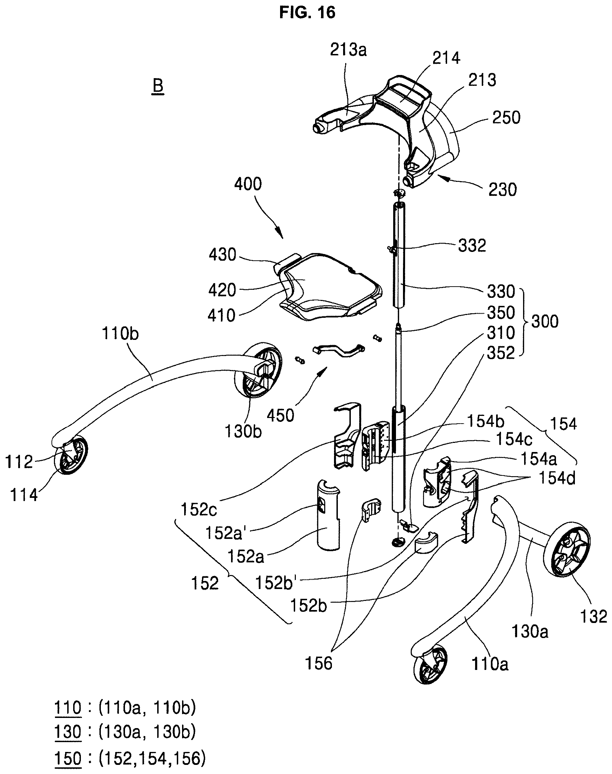

FIG. 16 is an exploded perspective view of an adaptive assistive and/or rehabilitative device according to an embodiment;

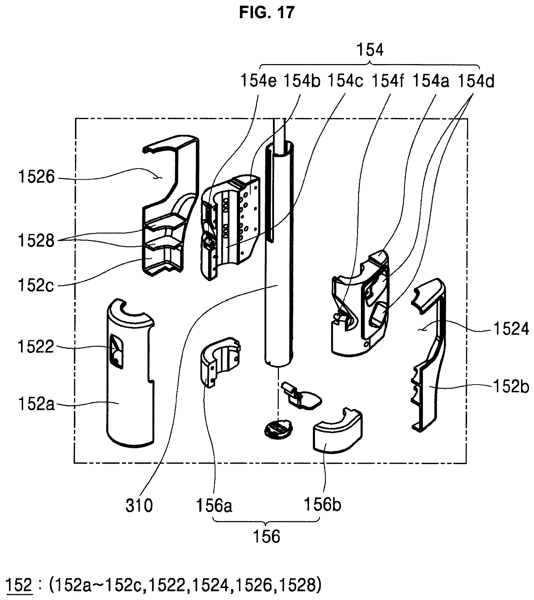

FIG. 17 is an enlarged perspective view of a lower housing of an adaptive assistive and/or rehabilitative device according to an embodiment;

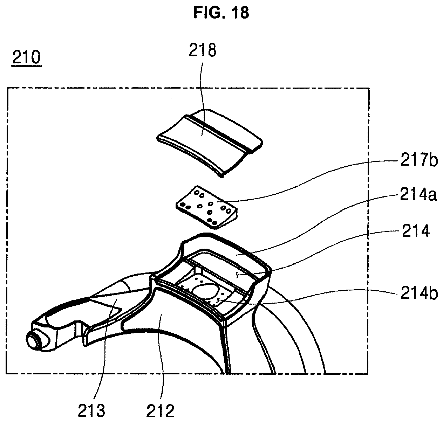

FIG. 18 is an enlarged and exploded perspective view of an upper support of an adaptive assistive and/or rehabilitative device showing a charger according to an embodiment;

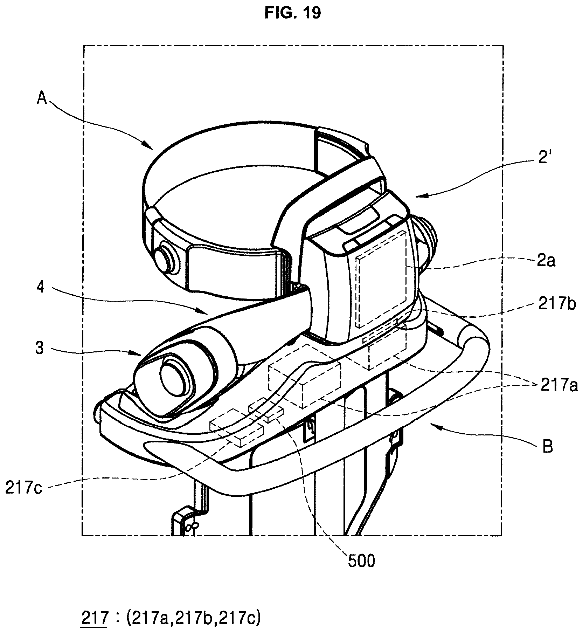

FIG. 19 is an enlarged perspective view of an adaptive assistive and/or rehabilitative device system, including a wearable assistive device coupled to an upper support of an adaptive assistive and/or rehabilitative device, showing a charger according to an embodiment;

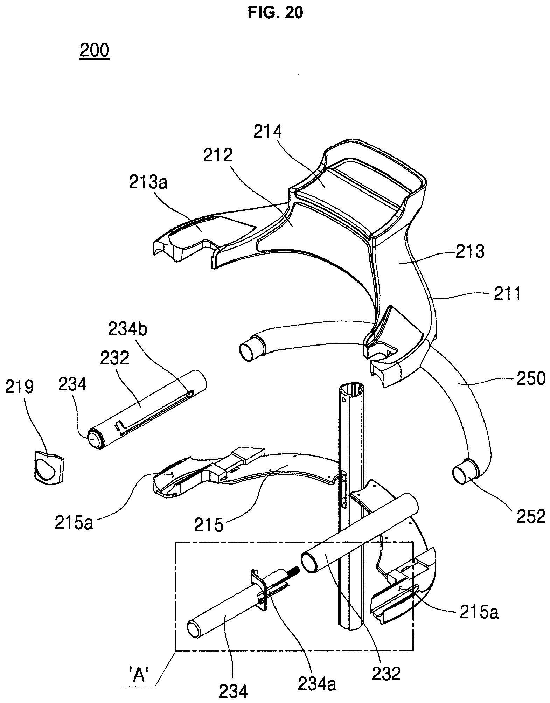

FIG. 20 is an exploded perspective view of an upper support of an adaptive assistive and/or rehabilitative device according to an embodiment;

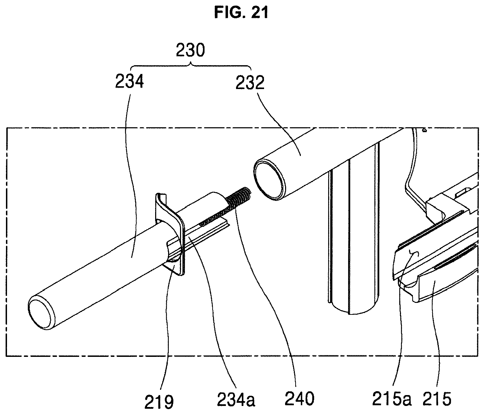

FIG. 21 is an enlarged perspective view of section 'A' of FIG. 20 showing a walker handle according to an embodiment;

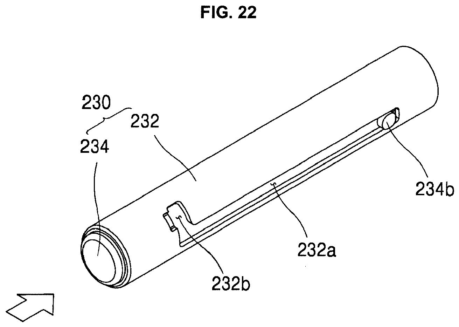

FIG. 22 is an enlarged perspective view of a walker handle when a handle member of the walker handle is completed inserted into a handle storage member of the walker handle according to an embodiment;

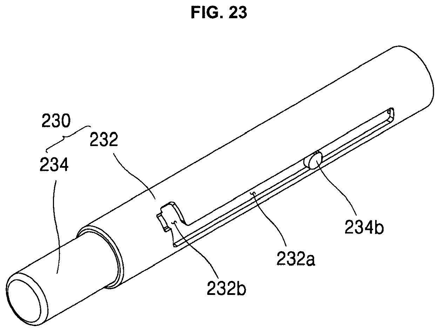

FIG. 23 is an enlarged perspective view of the walker handle in Figure 22 when the handle member is partially withdrawn from the handle storage member;

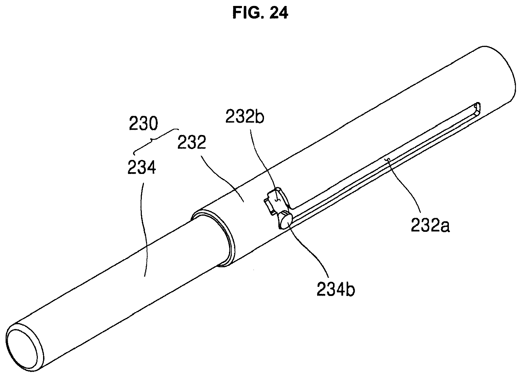

FIG. 24 is an enlarged perspective view of the walker handle in FIG. 22 when the handle member is completely withdrawn from the handle storage member;

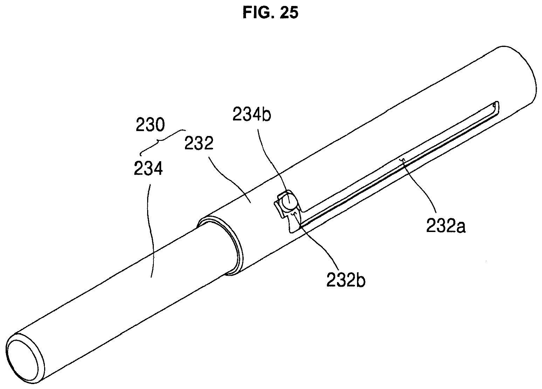

FIG. 25 is an enlarged perspective view of the walker handle in FIG. 22 when the handle member is completely withdrawn from the handle storage member, and rotated into a fixed withdrawn state;

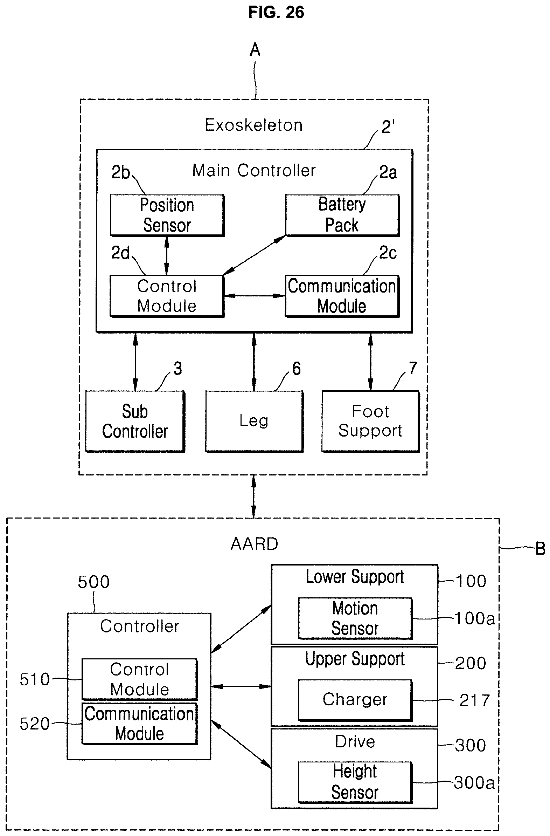

FIG. 26 is a block diagram showing the relationship among a main controller and subcontroller of the wearable assistive device, and a controller of the adaptive assistive and/or rehabilitative device according to an embodiment.

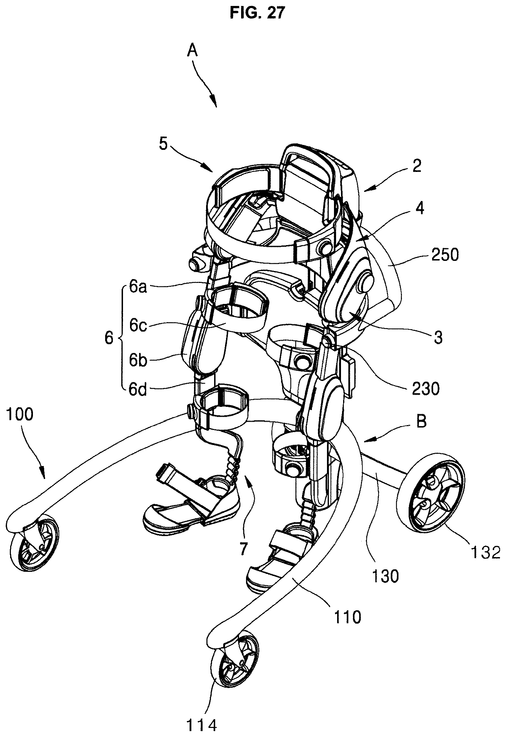

FIG. 27 is a perspective view of an adaptive assistive and/or rehabilitative device system, including a wearable assistive device coupled to an adaptive assistive and/or rehabilitative device in a standing state according to an embodiment;

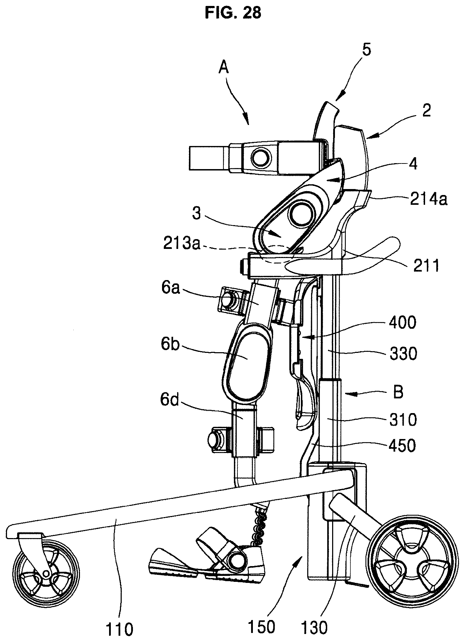

FIG. 28 is a side view of the adaptive assistive and/or rehabilitative device system in Figure 27;

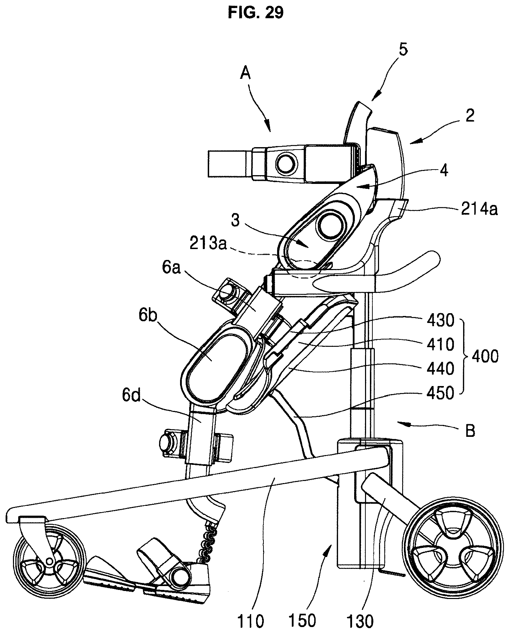

FIG. 29 is a side view of an adaptive assistive and/or rehabilitative device system, including a wearable assistive device coupled to an adaptive assistive and/or rehabilitative device transitioning from a standing state to a seated state, according to an embodiment where the adaptive assistive and/or rehabilitative device system transitions to or from a chair state or donning state;

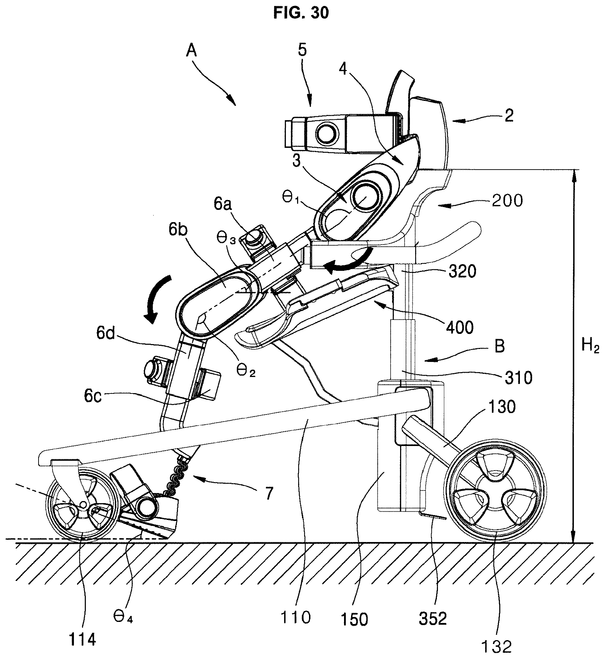

FIG. 30 is a side view of an adaptive assistive and/or rehabilitative device system, including a wearable assistive device coupled to an adaptive assistive and/or rehabilitative device transitioning from a standing state to a seated state, according to an embodiment where the adaptive assistive and/or rehabilitative device system transitions to or from a chair or donning state;

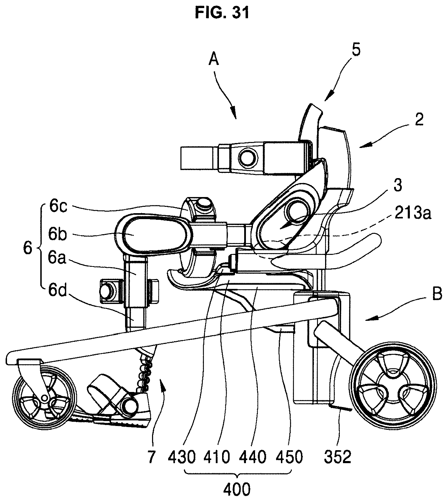

FIG. 31 is a side view of an adaptive assistive and/or rehabilitative device system, including a wearable assistive device coupled to an adaptive assistive and/or rehabilitative device in a seated state, according to an embodiment where the adaptive assistive and/or rehabilitative device system is in a chair state;

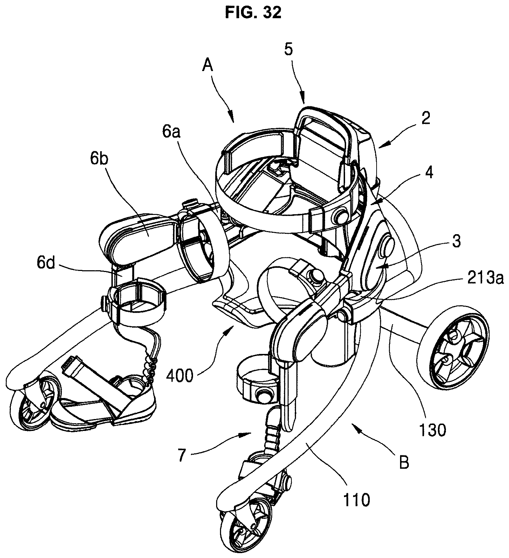

FIG. 32 is a perspective view of the adaptive assistive and/or rehabilitative device system in Figure 31;

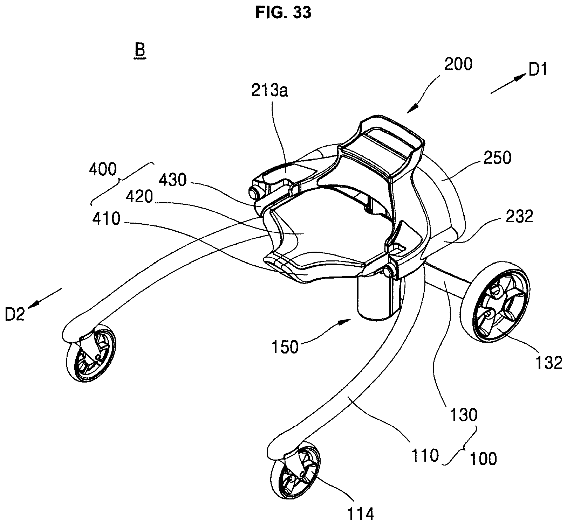

FIG. 33 is a perspective view of an adaptive assistive and/or rehabilitative device in a seated state according to an embodiment;

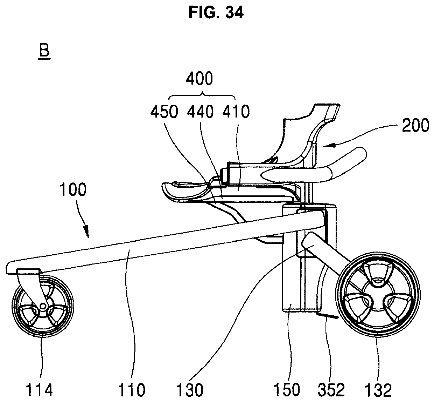

FIG. 34 is a side view of the adaptive assistive and/or rehabilitative device in Figure 33;

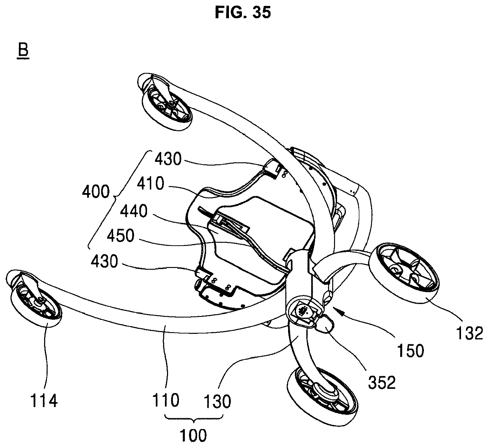

FIG. 35 is an upward perspective view of the adaptive assistive and/or rehabilitative device in Figure 33;

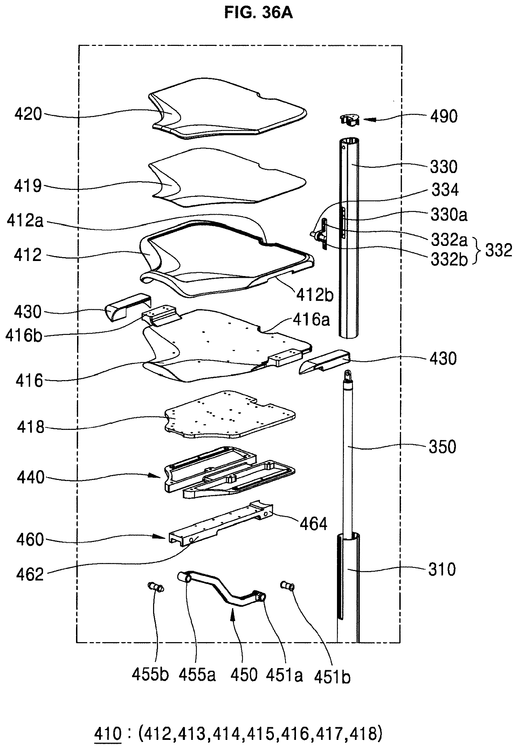

FIG. 36A is an exploded view of a chair assembly according to an embodiment;

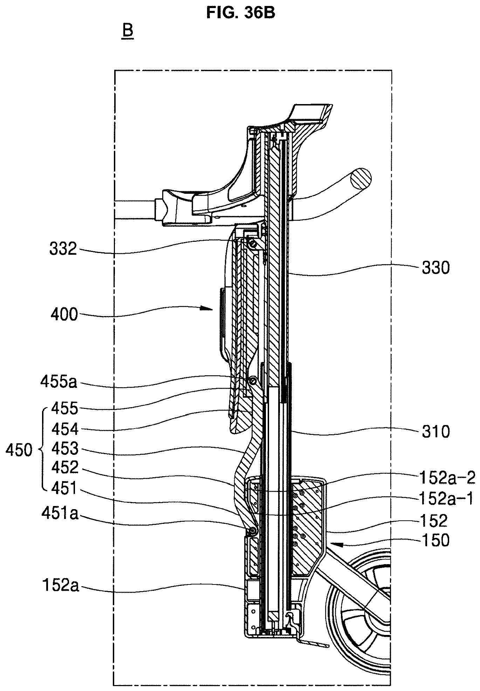

FIG. 36B is a side view of a chair assembly when the adaptive assistive and/or rehabilitative device is in a standing state;

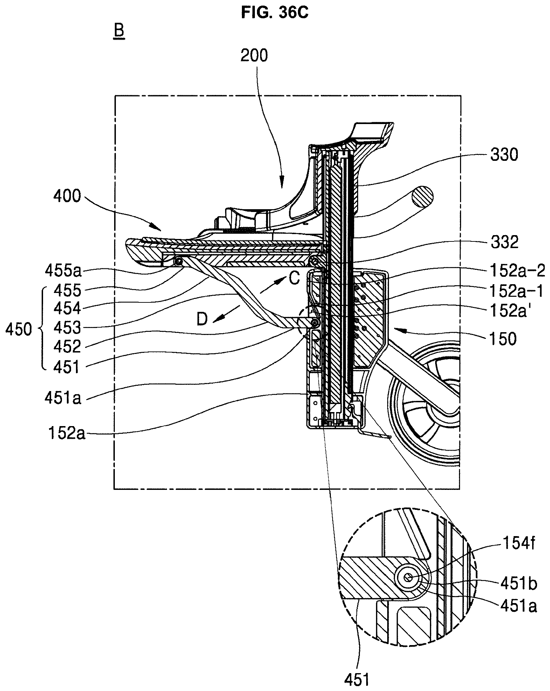

FIG. 36C is a side view of a chair assembly when the adaptive assistive and/or rehabilitative device is in a seated state;

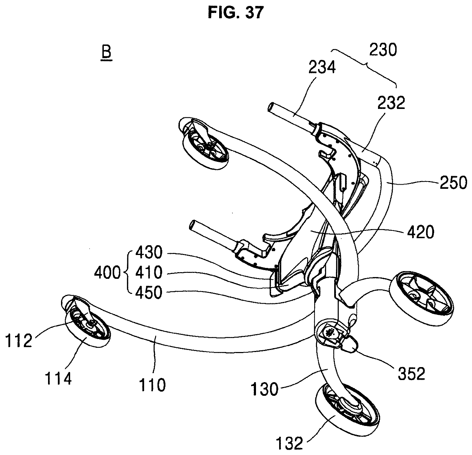

FIG. 37 is an upward perspective view of an adaptive assistive and/or rehabilitative device in a standing state according to an embodiment;

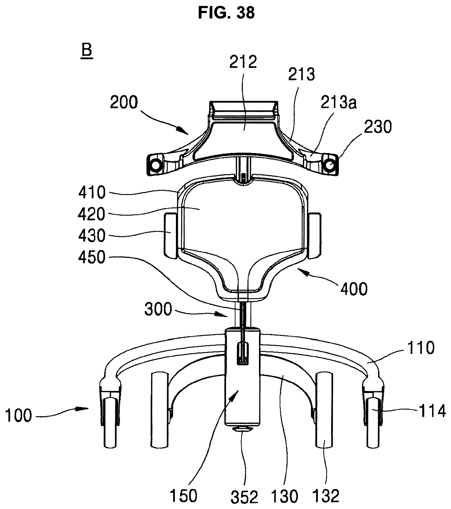

FIG. 38 is a view of a user or chair or walker side of the adaptive assistive and/or rehabilitative device in Figure 37; and

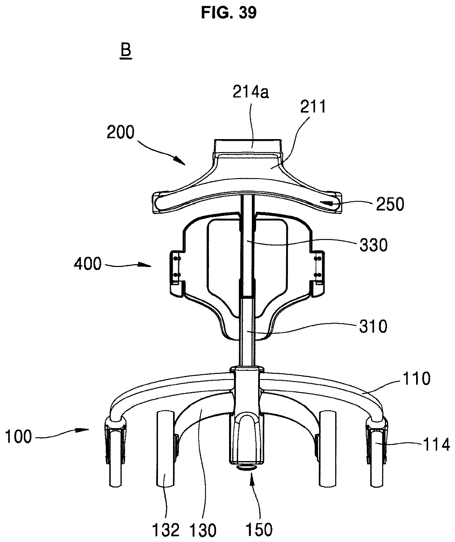

FIG. 39 is a view of an assistant or transport side of the adaptive assistive and/or rehabilitative device in FIG. 37.

An adaptive assistive and/or rehabilitative device (alternatively may be referred to as a multi-function compound supporting apparatus) configurable for use with another assistive device, such as a wearable assistive device, is disclosed herein. When the wearable assistive device is a robotic device such as an exoskeleton, the adaptive assistive and/or rehabilitative device may be transformed into a first configuration for charging or storing the exoskeleton, a second configuration for transport of the exoskeleton, a third configuration for assistance in donning of the exoskeleton by a user, and a fourth configuration for assisting the user while standing or walking with the exoskeleton.

### THE WEARABLE DEVICE

Referring to Figures 8 and 9, a wearable assistive device, e.g., a robotic device or an exoskeleton A may include a lumbar/back frame 2 and a waist/pelvic frame 5 mounted on a main body or main frame 4. The main frame 4 may include or be coupled to an actuated hip joint 3. The exoskeleton A may further include at least one limb, e.g., leg, leg assembly, or leg frame 6 longitudinally extending from the actuated hip joint 3 on the main frame 4, and at least one shoe or foot support 7 coupled to the leg 6. The exoskeleton A may be adjustable to conform to the size and shape of a user's body, and may weigh tens of kilograms. The exoskeleton A may be coupled to an adaptive assistive and/or rehabilitative device or AARD B, which is described later.

The exoskeleton A described herein may exemplify an exoskeleton that fits onto a lower body of the user. However, embodiments disclosed herein are not limited to lower body exoskeletons. For example, an exoskeleton A that fits onto an upper body of the user may be provided, and may be supported and/or coupled to the AARD B. Such an upper body exoskeleton A may include a pelvic frame and/or a lumbar frame, and a limb that couples to an arm of the user, for example. As another example, a full body exoskeleton or exoskeleton A that fits onto the upper body and the lower body of the user may also be provided. Such an exoskeleton A may also be supported and/or coupled to the AARD B.

The lumbar/back frame 2 may house a main controller 2' which may include a battery pack 2a (see FIG. 19 and FIG. 26) that provides power to operate and adjust the exoskeleton A, and a receiving coil provided on a lower side of the battery pack 2a that charges from a wireless charging coil pad or coil pad 217b provided in a charge assembly or charger 217 of the upper support 200 of the AARD B. The battery pack 2a and the charger 217 will be described in further detail when describing the upper support 200 of the AARD B. The main controller 2' may further include a position sensor 2b, a communication module 2c, and a control module 2d (see FIG. 26). The main controller 2' may calculate charge information and a height of the lumbar/back frame 2 from the floor based on information provided from the position sensor 2b and the battery pack 2a. The position sensor 2b may include a Global Positioning System (GPS) and/or an Inertial Measuring Unit (IMU), and the main controller 2' may calculate a height of the main controller 2' and/or the lumbar/back frame 2 based on information provided by the position sensor 2b.

The actuated hip joint 3 may include or house a subcontroller 3' (see FIG. 26), which may provide power to operate and adjust the wearable assistive device. The subcontroller 3' may further assist a motion of a user wearing the exoskeleton A by providing an assisting or assistive force. The main controller 2' may communicate with and/or control the subcontroller 3'.

The waist/pelvic frame 5 may be configured to mount on a pelvis or waist of a user, and may be adjusted via a one-touch dial method using a knob or dial. Adjustment of the one-touch dial of the waist/pelvic frame 5 and/or the size of the waist/pelvic frame 5 may be controlled by the main controller 2'.

The leg 6 may include an upper leg or upper leg frame 6a, lower leg or lower leg frame 6d, an actuated joint or actuated knee joint 6b, and at least one leg belt 6c that couples to a leg of the user. A leg belt 6c may be provided on the upper leg 6a, which may couple to a thigh of the user. Another leg belt 6c may be provided on the lower leg 6d, which may couple to a calf of the user. A size of the leg belt 6c may be adjusted via a one-touch dial method using a knob or dial. Adjustment of the one-touch dial of the leg belt 6c and/or the size of the leg belt 6c may be controlled by the main controller 2'.

The upper leg frame 6a may further include a coupling portion that couples to the exoskeleton support B. The coupling portion may be a narrow portion of the upper leg frame 6a. The actuated joint 6b may also be controlled by the main controller 2', and may provide power to operate and adjust the leg 6 and may further assist a motion of the user by contributing to the assisting force.

The upper leg frame 6a, the lower leg frame 6d, and/or the actuated joint 6b may further include a plurality of overlapping/slidable leg frames. A user may adjust a length of the leg 6 by adjusting the positions or an overlapping length of the leg frames via the main controller 2'. The upper leg frame 6a may be rotatably coupled to a bottom portion of the actuated hip joint 3', and may be coupled to the actuated joint 6b. The lower leg frame 6d may be rotatably coupled to the actuated joint 6b and coupled to the foot support 7. A user may adjust an angle θ₁ (see FIG. 30) between the actuated hip joint 3 and the upper leg frame 6a by using a dial of the subcontroller 3' or the main controller 2'. The main controller 2' may also control the angle θ₁ between the upper leg frame 6a and the actuated hip joint 3. The main controller 2' may control the actuated joint 6b to adjust an angle θ₂ between the upper leg frame 6a and the lower leg frame 6d. The angles θ₁ and θ₂ may be adjusted to conform to a posture or position of the user, including sitting, standing, and walking positions, and may be adjusted to control contact of the foot support 7 with a floor surface.

The leg 6 may further include a leg frame or link frame that allows the actuated joint 6b to pivot in a frontal plane of the user (that is, a user may bend their knee away from their body and out to the side), whereas structures coupling upper leg frame 6a to actuated hip joint 3 and coupling lower leg frame 6d to actuated joint 6b may allow the upper and lower legs 6a and 6d to rotate by angles θ₁ and θ₂ in a sagittal plane of the user.

Similar to a structure of the leg 6 to allow pivoting away from the leg of the user, the main frame 4 and the actuated hip joint 3 may also have a structure allowing the actuated hip joint 3 and/or a leg of the user to pivot toward and away from the hip of the user in the frontal plane. The actuated joint of the knee and hip may be driven by an actuator (hydraulic, pneumatic or electrical) or a motor.

The foot support 7 may be coupled to the lower leg frame 6d of the leg 6. The foot support 7 may couple to a bare foot of the user, or a shoe worn on the foot of the user. The foot support 7 may include pressure sensor that communicates with the main controller 2' and/or the subcontroller 3'. The main controller 2' and/or subcontroller 3' may determine whether the foot is in contact with the floor surface based on information provided by the pressure sensor, and may further calculate a change in a center of gravity of the user and/or a magnitude and direction of the assisting force provided to the user based on information provided by the pressure sensors.

The foot support 7 may further have an adjustable strap that conforms to the shape of a user, and an ankle support which may allow a free range of motion of an ankle of the user. The ankle support may have an elastic member allowing, for example, rotation of the foot support 7 and/or ankle of the user in a transverse plane of the user, rotation such as plantar flexion and dorsiflexion in the sagittal plane of the user, or a pivot motion such as ankle eversion and ankle inversion in the frontal plane of the user. The elastic member may include a wire that electrically connects the pressure sensor to the main controller 2' and/or the subcontroller 3'.

The exoskeleton A may be in a standing state when it is worn by a standing user (see FIG. 13), hung on the adaptive assistive and/or rehabilitative device (AARD) B, or transported on the AARD B (see FIG. 11). A standing state of the exoskeleton A may be defined when the leg 6 is extended such that angles θ₁ and θ₂ exceed a predetermined amount (that is, angles θ₁ and θ₂ are more obtuse), and/or when a height calculated by the main controller 2' based on information provided by the position sensor 2b exceeds a predetermined amount. A standing state of the exoskeleton A may be adjusted such that the foot support 7 may contact the floor surface, or may not contact the floor surface while the exoskeleton A is hanging from the adaptive assistive and/or rehabilitation device B (hereinafter, AARD).

When an assistive and/or rehabilitative system (hereinafter ARS) including the AARD and a wearable device is in a storage or charging state, such as a state exemplified in FIG. 10, a bottom of the foot support 7 may contact the floor surface, such that a load on the AARD B is reduced and the floor surface helps to support the exoskeleton A. Although the bottom of the foot support 7 may contact the floor, the leg 6 of the exoskeleton A may be slightly bent or folded such that it is not fully extended to prevent damage to the exoskeleton A.

When the ARS and/or the exoskeleton A is in a transport state, such as a state exemplified in FIG. 11, the foot support 7 may not contact the floor surface, such that the entire weight of the exoskeleton A is supported by the AARD B, and such that the foot support 7 does not drag on the floor surface. Adjusting the foot support 7 appropriately may help extend the life of the ARS by reducing wear on both the exoskeleton A and the AARD B.

The exoskeleton A may be in a seated state when it is applied or worn by a seated user, such as in FIG. 12, which exemplifies a donning or chair state of the ARS, or when the exoskeleton A is coupled to the AARD B when the AARD B is in third configuration, e.g., a seated state, also shown in Figures 31 and 32. A seated state of the exoskeleton A may be defined when the leg 6 is bent or folded such that angles θ₁ and θ₂ are less than a predetermined amount (that is, angles θ₁ and θ₂ are more acute), and/or when a height calculated by the main controller 2' based on information provided by the position sensor 2b is less than a predetermined amount.

### THE ADAPTIVE ASSISTIVE AND/OR REHABILITATION DEVICE (AARD)

As illustrated previously, the AARD B may transform into various configurations including a first configuration for charging and/or storing the wearable device A, a second configuration for transporting of the wearable device A (see, e.g., FIGS. 10 and 11), a third configuration for assistance in donning of the wearable device (see, e.g., FIG. 12), or a fourth configuration for assisting a user while standing and/or walking with the wearable device A (see, e.g., FIG. 13).

Referring to FIG. 14, the AARD B may include a lower assembly or lower support 100, an upper assembly or upper support 200, a coupling assembly or drive assembly 300 coupling the lower support 100 to the upper support 200, a chair assembly or chair 400 coupled to the drive assembly 300 and the lower support 100, and a controller 500 which is shown in FIG. 26 and may be housed in the upper support 200. The controller 500 may be provided in the upper support 200 and may communicate with a main controller 2' and a subcontroller 3' of the exoskeleton A.

The structures of the lower support 100 and the upper support 200 may allow the AARD B to be horizontally stackable with other AARDs B without interference, as exemplified in FIG. 10. Further, an assistive and/or rehabilitation system (ARS) including a exoskeleton A supported by an AARD B may include a lower support 100 and upper support 200 configured to be horizontally stacked and/or overlapped with other similar or identical ARS such that an AARD B₁ of a first ARS does not interfere with a exoskeleton A₂ or AARD B₂ horizontally stacked on an assistant or transport side of the AARD B₁.

An assistant side or a transport side may be defined as the side on which the assistant stands or walks during a transport state of the ARS. A user side, or a chair or walker side, of the AARD B may be defined as the side on which the user stands, sits, or walks during a chair state or a walker state of the ARS. The assistant may push the AARD B in the direction of D2 in FIG. 14 in a transport state of the ARS, while a user may push the AARD B in the direction of D1 in a walker state of the ARS.

### Lower Support of AARD

The lower support 100 may be configured to stack with a lower support of a similar or identical AARD. The lower support 100 may further be configured to provide a very low center of mass and/or center of gravity. The lower support 100 may be made of a sturdy metal or other strong material, and may be configured to have a predetermined strength. The lower support 100 may further be configured to have a predetermined mass or weight, with more weight distributed on a bottom portion of the lower support 100 than an upper portion of the lower support 100.

The lower support 100 may be configured to support the upper support 200, drive assembly 300, and controller 500. In a storage and/or charging state and in a transport state of the ARS, the lower support 100 may further be configured to support the exoskeleton A, in addition to the upper support 200, drive assembly 300, and controller 500. In a chair or donning state or in a walker state of the ARS, the lower support 100 may further be configured to support the weight of the user, in addition to the exoskeleton A worn by the user, and the upper support 200, drive assembly 300, and controller 500 of the AARD B.

The lower support 100 may have a lower casing or lower housing 150 that holds a portion of the drive assembly 300, a first bottom foundation or base frame 110, and a second bottom foundation or subframe 130. The base frame 110 may be provided on the user side, while the subframe 130 may be provided on the assistant side. The base frame 110 and the subframe 130 may each have, for example, a U-shape, V-shape, or ⊏- shape, etc., but the shapes of the base frame 110 and the subframe 130 are not limited thereto. The shapes of the base frame 110 and the subframe 130 may be configured to protect the user using the ARS in a walking state, and/or to protect the assistant of the user using the ARS in a transport state. The shapes of the base frame 110 and the subframe 130 may further be configured to allow easy, convenient, and simple stacking of the ARSes in a storage and/or charging state.

The base frame 110 and the subframe 130 are each coupled to the lower housing 150 and may each have a first end and a second end that extend from the lower housing. The base frame 110 and the subframe 130 may be coupled to the lower housing 150 such that first and second ends of the base frame 110 extend in a direction opposite to a direction in which first and second ends of the subframe 130 extend. First and second ends of the base frame 110 may extend in the user side, while first and second ends of the subframe 130 may extend in the assistant side.

As an example, the base frame 110 may extend from a first side of the lower housing 150 toward the user side, and the subframe 130 may extend from a second side of the lower housing 150 toward the assistant side. Both the base frame 110 and the subframe 130 may couple to or be inserted through third and fourth sides of the lower housing. Alternatively, the base frame 110 may couple to the first side of the lower housing 150 and the subframe 130 may couple to the second side of the lower housing 150. For example, the base frame 110 may be integrally formed with and/or welded to the first side of the lower housing 150, and the subframe 130 may be integrally formed with and/or welded to the second side of the lower housing 150. As another example, the base frame 110 may be an extension or protrusion extending from the first side of the lower housing 150, and may include one wheel. The second side of the lower housing 150 may be opposite a first side of the lower housing 150, and a third side of the lower housing 150 may be opposite a fourth side of the lower housing 150. The subframe 130 may extend a lesser extent from the lower housing 150 than the base frame 110. The base frame 110 and the subframe 130 may each have a predetermined strength and/or may be made of a material capable of supporting the weight of the user and the exoskeleton A.

The base frame 110 may couple to the lower housing 150 at a center of an outer perimeter of the base frame 110. The subframe 130 may similarly couple to the lower housing 150 at a center of an outer perimeter of the subframe 130. Alternatively, the base frame 110 may include separate first and second members or first and second extensions 110a and 110b that each couple to the lower housing 150, as shown in FIG. 16. Similarly, subframe 130 may include first and second members or first and second extensions 130a and 130b.

First extension 110a of the base frame 110 may couple to the third side of the lower housing 150 and may include the first end of the base frame 110, and the second extension 110b of the base frame 110 may couple to the fourth side of the lower housing 150 and may include the second end of the base frame 110. Similarly, first extension 130a of the subframe 130 may couple to the third side of the lower housing 150 and may include the first end of the subframe 130, and second extension 130b of the subframe 130 may couple to the fourth side of the lower housing 150 and may include the second end of the subframe 130.

Each of the first and second extensions 110a and 110b of the base frame 110 may have a curvature such that the first end and second end of the base frame 110 protrude in the user direction. Similarly, each of the first and second extensions 130a and 130b of the subframe 130 may have a curvature such that the first end and second end of the subframe 130 protrude in the assistant direction, and/or opposite and away from the first end and second end of the base frame 110. Further, the width or diameter of the base frame 110 may be tapered as the base frame 110 extends away from the lower housing 150 until the first and second ends of the base frame 110, which may have a large width or diameter of the base fame 110 prior to the first and second ends. Alternatively, the width or diameter of the base frame 110 may be uniform throughout. The same may apply to the width or diameter of the subframe 130.

The base frame 110 and the subframe 130 may have a width that increases away from the lower housing 150, such that the base frame 110 may accommodate a subframe 130', a lower housing 150', and a portion of a base frame 110' of a similar or identical AARD B'. An inner width of the base frame W1 may be large enough to accommodate a sitting, standing, or walking user wearing the exoskeleton A. An inner width of the subframe W3 may be large enough to accommodate a standing or walking assistant that may transport the ARS.

A wheel 114 may be provided on each of the first end and the second end of the base frame 110, and a wheel or subwheel 132 may be provided on each of the first end and the second end of the subframe 130. Each wheel 114 and each subwheel 132 may be configured to move the AARD B, and may each have a brake that may be controlled by the main controller 2'. Furthermore, each wheel 114 and each subwheel 132 may include a motion sensor or movement sensor 100a (see FIG. 26) that senses rotation of the wheel 114 or subwheel 132 and an operation of the brake. Each wheel 114, subwheel 132, and/or movement sensor or motion sensor 100a may produce a braking signal or brake signal.

A length L1 of the base frame 110 may be defined as the distance between (1) a center of a reference line from a center of the wheel 114 provided on the first end of the base frame 110 to a center of the wheel 114 provided on the second end of the base frame 110, and (2) an outer surface of the lower housing 150 that faces the user side. L1 may be a line segment parallel to the floor surface. Similarly, a length of the subframe 130 may be defined as the distance between (1) a center of a reference line from a center of the subwheel 132 provided on the first end of the subframe 130 to a center of the wheel 132 provided on the second end of the base frame 130, and (2) an outer surface of the lower housing 150 that faces the assistant side. The length of the subframe 130 may be a line segment parallel to the floor surface.

The length of the subframe 130 may be less than a length of the base frame 110. The base frame 110 may thus be configured to fit an entirety of a subframe, subwheels, a lower housing, and a portion of a base frame of an identical or similar AARD within the length L1 of the base frame 110. In addition, the smaller length of the subframe 130 may allow the subframe 130 to fit inside of a base frame of an identical or similar AARD.

Each of the wheels 114 of the base frame 110 may contact the floor surface and may be coupled to a wheel bracket 112. The wheel brackets 112 couple the wheels 114 to the first and second ends of the base frame 110. A width of each of the wheels 114 may be equal to or less than a width of the first end and/or the second end of the base frame 110. In other words, a width of each of the wheels 114 may be equal to or less than an outer width of an end of the base frame 110 defined as W2. The width of the wheels 114 may be configured to minimize an interference of the wheels 114 with a walking of the user or the assistant. Alternatively, a width of each of the wheels 114 may be greater than a width of the first end and/or the second end of the base frame 110 to enhance stability. Each of the wheels 114 may be coupled to the wheel bracket 112 such that they do not protrude past an inner circumference of the base frame 110. Alternatively, the wheels 114 may be connected at inner sides or outer sides of the first and second ends.

Each of the subwheels 132 of the subframe 130 may be directly rotatably coupled to an outer side of the first and second ends of the subframe 130 via a hinge, for example, so that they do not interfere or collide with the assistant of the user, who may transport the ARS. The subwheels 132 may be larger and/or heavier than the wheels 114 of the base frame 110 to provide sufficient support and/or balance weight, since the subframe 130 is smaller than the base frame 110. The subframe 130 may further be configured to help distribute the load applied to the lower support 100 so that the AARD B is less likely to tip or turn over.

The base frame 110 may be coupled to the lower housing 150 at a position higher than a position where the first and second ends of the base frame 110 are coupled to the wheel brackets 112. The base frame 110 may incline relative to the floor surface, and may have an angle of inclination α₁, as shown in FIG. 15. Similarly, the subframe 130 may be coupled to the lower housing 150 at a position higher than a position where the first and second ends of the subframe 130 are coupled to the subwheels 132. Since a length of the subframe 130 may be less than a length of the base frame 110, the subframe 130 may incline relative to the floor surface at a steeper angle than an angle at which the base frame 110 inclines relative to the floor surface. That is, an angle of inclination α₂ of the subframe 130 may be greater than angle of inclination α₁ of the base frame 110. These angles of inclination α₁ and α₂ may be configured or predetermined to allow easy, simple, and convenient stacking of the lower support 100 with other identical or similar lower supports of other ARSes.

When the ARS is in a storage or charging state, as exemplified in FIG. 10, a exoskeleton Aₙ may hang from an AARD Bₙ in a portion corresponding to about a half of the length L1 of a base frame 110ₙ that is closer to the lower housing 150ₙ than the first and second ends of the base frame 110ₙ. This portion of the AARD Bₙ, along with a portion that includes the lower housing 150ₙ, a subframe 130ₙ, and subwheels 132ₙ may be provided within another n+1th base frame 110ₙ₊₁ of an n+1th AARD Bₙ₊₁ of an n+1th ARS such that it does not interfere with an n+1th exoskeleton Aₙ₊₁ of the n+1th ARS. Furthermore, the exoskeleton Aₙ₊₁ may occupy a space within the subframe 130ₙ of the AARD Bₙ. AARDs Bₙ₊₁ may further be stacked in this way to occupy less space since they overlap with each other.

The lower housing 150 supports the base frame 110, the subframe 130, and the drive assembly 300. The lower housing 150 is configured to provide a low center of mass and/or center of gravity of the AARD B. The lower housing 150 may have a cylindrical, elliptical, polyhedral, or parallelepiped shape, for example. Referring to FIG. 16, the lower housing 150 has an outer casing or outer shell 152, an inner casing, inner block, or inner shell 154 provided inside the outer shell 152, and a balance weight 156 provided inside, under, or surrounding the inner shell 154.

The outer shell 152 may have a shape corresponding to a shape of the lower housing 150, and the inner shell 154 may have a shape corresponding to a shape of the outer shell 152 and/or the lower housing 150. The outer shell 152 and the inner shell 154 may support the drive assembly 300. The outer shell 152 may have an approximately cylindrical or an elliptical cylindrical shape. In the outer shell 152, a plurality of pieces may be coupled for ease of assembly.

Referring to Figures 16 and 17, the outer shell 152 may have a first or seat-link shell 152a, and first and second shells (or second and third shells) 152b and 152c. The inner shell 154 may couple to a chair or chair assembly 400 of the AARD B. The seat-link shell 152a may have a seat-link hole 1522 to allow passage of a seat link or linking member 450 that couples the chair assembly 400 to the lower housing 150. The seat link 450 is described hereinafter in the Chair Assembly section of this disclosure.

The seat-link hole 1522 may be formed in an outer peripheral surface of the first shell 152a. Referring to FIG. 36B, when making the seat-link hole 1522, a part of the plate surface of the first shell 152a may be cut. The inner shell 154 may have a cut portion that is inclined inward, or may have a portion of its outer surface that is cut, edged, or chiseled. Alternatively, an outer surface of the inner shell 154 may be formed or molded to have the cut portion. The outer surface of the inner shell 154 may be formed in any variety of ways so that it has the cut portion. The cut portion may be U-shaped or V-shaped, and may correspond to a size of the seat-link hole 1522. The seat-link hole 1522 may be formed on the plate surface of the first shell 152a. For convenience, an inclined portion may be referred to as an inclined portion 152a-1. An upper side above the inclined portion 152a-1 may be referred to as an upper surface 152a-2. The inclined portion 152a-1 and upper surface 152a-2 above the inclined portion 152a-1 may correspond to an outer contour of the inner shell 154 so that the inclined portion 152a-1 aligns with the cut portion of the inner shell 154. The seat-link hole 1522 may be provided below the inclined portion 152a-1. The structures of the inner shell 154 and outer shell 142 may prevent the seat link 450 from interfering with the first shell 152a when the AARD B transitions between standing and seated states.

The seat-link shell 152a may have coupling protrusions which may be aligned with coupling grooves provided on the first and second coupling shells 152b and 152c. Alternatively, the seat-link shell 152a may be coupled to the first and second coupling shells 152b and 152c via a hook structure or an internally hidden coupling structure, for example.

The first and second coupling shells 152b and 152c may be provided on opposite sides of the lower housing 150, e.g., on third and fourth sides of the lower housing 150. Each first and second coupling shell 152b and 152c may include an opening. First coupling shell 152b may include a first opening 1524, and second coupling shell 152c may include a second opening 1526. The openings 1524 and 1526 may face each other and may have shapes that correspond to each other. The base frame 110 and the subframe 130 may penetrate the openings 1524 and 1526 to couple to the lower housing 150 and interact with the inner shell 154. First and second coupling shells 152b and 152c may include ribs 1528 to provide, e.g., rigidity.

The inner shell 154 may include a first block 154a coupled to a second block 154b. The first block 154a may include a first coupling pin 154f, which may be inserted into a coupling hole of a second coupling pin 154e of the second block 154b. For example, the first coupling pin 154f may be a cylindrical projection with a protrusion having a shape corresponding to a shape of the coupling hole of the second coupling pin 154e. The coupling hole may be a cylindrical hollow hole or cavity in the second coupling pin 154e. Positions of the first and second coupling pins 154f and 154e may correspond to the seat-link hole 1522 so that the seat link 450, via first hinge knuckle or first hinge portion 451a and first hinge pin 451b, may couple to the lower housing 150 via first and second coupling pins 154f and 154e. The first and second blocks 154a and 154b may each have a groove 154c that holds or supports the drive assembly 300. The groove 154c of the first block 154a and the groove 154c of the second block may mate together to support a lower bar, pipe, or shaft 310 of the drive assembly 300, and may have a shape corresponding to the shape and size of the lower shaft 310 of the drive assembly 300.

The first and second blocks 154a and 154b may each have insertion recesses, recesses, or attachment sections 154d. The recesses 154d may include at least one opening, or a set of two grooves or cavities on outer surfaces of the first and second blocks 154a and 154b. The recesses 154d on the first block 154a may face or align to a position of the opening 1524 in coupling shell 152b, and the insertion portion 154d on the second block 154b may face or align to a position of the opening 1526 in coupling shell 152c. A size and shape of the openings 1524 and 1526 is configured to allow the recesses 154d to be exposed.

When the recesses 154d each includes a set of two grooves, one groove in the set of two grooves may receive an extension of the base frame 110, and the other groove in the set of two grooves may receive an extension of the subframe 130. For example, the first extension 110a of the base frame 110 may be inserted through opening 1524 into a top groove of the recesses 154d provided in the first block 154a, and the first extension 130a of the subframe 130 may be inserted through opening 1524 into a bottom groove in recesses 154d provided in the first block 154a. The second extension 110b of the base frame 110 may be inserted through opening 1526 into a top groove of the recesses 154d provided in the second block 154b, and the second extension 130b of the subframe 130 may be inserted through opening 1526 into a bottom groove of the recesses 154d provided in the second block 154b. The first and second extensions 110a, 110b, 130a, 130b of the base frame 110 and the subframe 130 may be pressed/friction fitted into the grooves of the recesses 154d, may be screwed in via threading structures, or attached or bolted by machine screws, set screws, metal screws, lugs, bolts, etc.

In an alternative embodiment, the inner shell 154 may include a set of holes or openings 154d as the attachment section. When there is a set of two openings 154d provided in each of the first and second blocks 145a and 154b, the base frame 110 and the subframe 130 may penetrate through the holes 154d. In such an embodiment, a size of the lower housing 150 may be longer or wider than in an example where separate first and second extensions 110a, 110b, 130a, and 130b are coupled to grooves 154d.

The base frame 110 may, for example, penetrate opening 1524, a left hole 154d provided in the first block 154a, a left hole 154d provided in the second block 154b, and opening 1526. The subframe 130 may penetrate opening 1524, a right hole 154d provided in the first block 143a, a right hole 154d provided in the second block 154b, and opening 1526. The holes 154d may be provided on portions of the first and second blocks to the side of the pipe groves 154c, such that the base frame 110 and subframe 130 may not interfere with a lower shaft 310 of the drive assembly 300. In this alternative example, the base frame 110 and subframe 130 may be unitary or may have first and second extensions 110a, 110b, 130a, 130b. The coupling structures of the base frame 110 and the subframe 130 to the lower housing 150 are not limited to those disclosed herein. For example, base frame 110 and subframe 130 may be welded to the lower housing 150.

The first and second blocks 154a and 154b may be configured to support the lower shaft or pipe 310 of the drive assembly 300, the base frame 110, and the subframe 130. When the base frame 110 and the subframe 130 include separate first and second extensions 110a, 110b, 130a, and 130b that do not completely penetrate through the first and second blocks 154a and 154b, the blocks 154a and 154b may be shorter and/or smaller, which may provide a more compact lower housing 150. The first and second blocks 154a, 154b may be hollow, may be solid, may have a predetermined thickness, may have a predetermined weight, or may be filled with a substance similar or identical to a material of the balance weight 156.

The balance weight 156 may be provided in the lowermost part of the lower housing 150, such as in a bottom portion of the inner shell 154 or in a bottom portion of the outer shell 152 below the inner shell 154. The balance weight may have a shape that corresponds to the lower housing 150, the inner shell 154, or the outer shell 152. The balance weight may have a cylindrical shape. The balance weight 156 may cover an end of the lower shaft 310 of the drive assembly 300 and may be formed of a plurality of pieces, such as first balance weight 156a provided under or next to first block 154a and second balance weight 156b provided under or next to second block 154b. The balance weight 156 helps to maintain a very low center of mass and/or center of gravity of the AARD B, and further maintain a very low center of mass and/or center of gravity of the ARS. The balance weight 156 may have a predetermined weight and/or may be formed of a material with a predetermined density.

### Upper Support of the AARD

The upper support 200 may charge and support the exoskeleton A when the ARS is in a storage or charging state and transport state, and may support the user and the exoskeleton A when the ARS is in a donning state, e.g., a chair state and a walker state. The lower support 100 may be configured to provide stability and a lower center of mass, and may also be configured to conveniently stack with other ARSs. The upper support 200 may be configured to support the exoskeleton A and interact with the user or the assistant.

Referring to Figures 14, 15, and 20, the upper support 200 may include a main body, main frame, or housing 210, first handle or walker handle 230, and a second handle or transport handle 250. The main frame 210 of the upper support 200 may primarily support the exoskeleton A when the ARS is in a storage and/or charging state and a transport state. The transport handle 250 may be a handlebar primarily used by the assistant in a transport state and walker state, and the walker handle 230 may be primarily used by the user in a walker state.

The main frame or housing 210 may include an outer wall 211, an inner wall 212, at least two side walls 213, at least one leg support or leg insert 216 (broadly referred to as limb insert 216), a lower plate or lower surface 215, and an upper plate or upper surface 214. The main frame 210 may have a first and second end and may have a general U-shape when viewed down at the main frame 210 from above the main frame 210. The outer wall 211 may have a U-shape, a demi-ring shape surrounding the main frame 210, or a shape roughly corresponding to the user's body and may convexly protrude toward the assistant side of the AARD B. During a transport state of the ARS, the outer wall 211 may face the assistant and the assistant may hold transport handle 250 and push the AARD B. The outer wall 211 may have a height that decreases outward from a center, and may include a shock absorbing material that may help to absorb vibrations during any collisions.

The inner wall 212 may have a shape corresponding to the outer wall 211, a U-shape or a demi-ring shape surrounding the user, or may have a shape corresponding to the user's body or a lower back portion of the user's body, and may face the user side of the AARD B. During the walker state of the ARS, the exoskeleton A may be decoupled from the AARD B, and the inner wall 212 may face the user and the user may use the walker handle 230 to push the AARD B as the user walks, and/or to allow the AARD B to guide and support the user. The user may wear the exoskeleton A. The inner wall 212 may have a general concave or U-shape. The inner wall 212 may include a shock absorbing material to provide comfort to the user in a chair, sitting, or donning state of the ARS. Similar to the outer wall 211, a height of the inner wall 212 may decrease outward from a center of the inner wall 212.

The two side walls 213 may couple the outer wall 211 to the inner wall 212 and may each have an inclined shape. The two side walls 213 may have a supporting section or portion on each end of the main frame 210 of the upper support 200 that faces an upward direction, and a coupling section or portion that faces outward or to a side. The coupling section of each side wall 213 may couple to the upper surface 214, which faces upward like the support portion of each side wall 213. The support portion and the coupling portion of each side wall 213 may smoothly connect such that the side wall 213 is a curved surface extending perpendicularly downward from the upper surface 214 and curving such that by the time it reaches an end of the main frame 210 of the upper support 200, it faces in an upward direction.

The two side walls 213 may be configured to support the actuated hip joint 3 of the exoskeleton A. The support portion of each side wall 213 may include a contact groove, contact recess, or concave section 213a, which may support the actuated hip joint 3 of the exoskeleton A in the storage and/or charging state or the transport state of the ARS. The exoskeleton A may hang by the actuated hip joint 3 on the AARD B on the contact groove 213a. The contact groove 213a may include a soft or shock absorbing material to prevent damage to the exoskeleton A. The contact groove 213a may have a concave recess shape, or may be planar.

The leg insert 216 may be formed in at least one of a first or second end of the main frame 210 of the upper support 200. The leg insert 216 may be formed adjacent to the inner wall 212 and the side wall 213. The leg insert 216 may be provided below the contact groove 213a. The leg insert 216 may have a U-shape or a recessed groove in which a section of the leg 6 may be inserted. Furthermore, the section of the leg 6 may be inserted into the leg insert 216. The leg 6 may be pressed/friction fitted into the leg insert 216, or may simply be inserted into the leg insert 216 and supported by the actuated hip joint 3 hanging on the contact groove 213a. An inner surface of the leg insert 216 may have a size and shape corresponding to the size and shape of the section of the leg 6, or corresponding to the size and shape of a portion of the upper leg frame 6a, or a portion of the leg 6, that is inserted into the leg insert 216. Alternatively, the inner surface of the leg insert 216 may be larger than a section of the leg 6 that is inserted, and may be smaller than a section of the leg 6 that hangs on the leg insert 216.

The lower surface 215 may couple lower sides of the outer and inner walls 211 and 212. The upper surface 214 may couple upper sides of the outer and inner walls 211 and 212 and may also couple upper sides of the at least two side walls 213. The upper surface 214 may be configured to support the lumbar/back frame 2 of the exoskeleton A. The upper surface 214 may include a shock absorbing material that may help to absorb vibrations during any collisions. The upper surface 214 may include a contact rib or guide flange 214a which protrudes from the upper surface 214 by a predetermined height to prevent the lumbar/back frame from detaching from or sliding off of the upper surface 214. The upper surface 214 and the main frame 210 may have a predetermined strength such that the upper surface 214 may support the exoskeleton A alone. For example, in an embodiment where the contact groove 213a and the leg insert 216 are omitted, the exoskeleton A may couple to the upper surface 214, may not couple to the leg insert 216, and may or may not couple to the side wall 213.

Referring to Figures 18-19, the main frame 210 may be partially hollow to accommodate a charger or charge assembly 217 and/or a controller 500. The charger 217 may be provided within the main frame 210 under the upper surface 214, or adjacent to a lower side of the upper surface 214. Alternatively, the charger 217 may be provided on top of the upper surface 214 at an upper side, and a plate 218 may be provided on top of the charger 217 to cover the charger 217. The plate 218 may be at a height lower than the height of the contact rib 214a such that the lumbar/back frame 2 of the exoskeleton A is supported on top of the plate 218 and within the contact rib 214a. However, embodiments disclosed herein are not limited to the placement of the charger 217, and the charger 217 may be provided at any location corresponding to where the exoskeleton A may be charged, and/or any location corresponding to where the receiving coil and/or the battery pack 2a of the exoskeleton A is located.

The charger 217 may include a large capacity battery pack or battery pack 217a, a wireless charging coil pad or coil pad 217b, and a power supply, power transfer, or power converter 217c. The battery pack 217a, the coil pad 217b, and the power supply 217c may be stored adjacent to each other in a receiving space of the main frame 210, or may be spaced apart from each other or stored in separate receiving spaces.

The coil pad 217b may include a coil wound between plate-shaped pads. The coil pad 217b may be inserted into a receiving groove or receiving space 214b formed in the upper surface 214. The plate 218 may cover the receiving space 214b and the coil pad 217b to protect the coil pad 217b.

The battery pack 217a may include a plurality of chargeable batteries, which may have a large capacitance and may be stored in a receiving space 214b of the main frame 210 of the upper support 200. The battery pack 217a may be connected to the power supply 217c and may be charged by the power supply 217c.

The power supply 217c may be provided on one side of the main frame 210 and may connect to an external domestic, industrial, or commercial power source. The power supply 217c may electrically connect the external power source via a terminal which may correspond to a cable and connector shape of the external power source, for example. The power supply 217c may also be electrically connected to the battery pack 217a to supply external power to the battery pack 217a. The power supply 217c may include an ac/dc converter to convert ac current to dc current, which the battery pack 217a may receive. Alternatively, the power supply may be also connected to the coil pad 217b to charge the battery pack 2a in order to bypass the battery pack 217a and charge the exoskeleton A first before the AARD B.

The battery pack 217a may be electrically connected to the power supply 217c and the coil pad 217b. The battery pack 217a may provide a current to the coil pad 217b, which may generate a magnetic field in the coil pad 217b. When the exoskeleton A is coupled to or supported by the AARD B, the coil pad 217b may be at a position corresponding to the receiving coil in the battery pack 2a of the exoskeleton A. The magnetic field generated by the coil pad 217b may induce an electric current in the receiving coil in the battery pack 2a of the exoskeleton A, charging the exoskeleton A. If the battery pack 217a is charged, it may charge the exoskeleton A even if the power supply 217c of the AARD B is disconnected from the external power source.

When the ARS is in the storage or charging state, multiple ARSes may be stacked and simultaneously charged. Each AARD Bₙ may use charger 217ₙ to charge battery pack 2aₙ of the exoskeleton Aₙ via the external power source or via the battery pack 217ₙ of the AARD Bₙ. A charging mode may be stopped when charge of the battery pack 2a of the exoskeleton A is completed. The charging mode or a charge setting may be controlled by the main controller 2' of the exoskeleton A or a separate controller provided in the main controller 2' of the exoskeleton A.

Referring to FIG. 20, the upper support 200 may also include the walker handle 230 and the transport handle 250. The walker handle 230 may be provided on the user side of the AARD B, while the transport handle 250 may be provided on the assistant side of the AARD B. The transport handle 250 may be coupled to the main frame 210, and/or coupled to a part of the walker handle 230. The walker handle 230 may be provided at a first and/or second end of the main frame 210 of the upper support 200, or the walker handle 230 may be provided at or below each of the first and second ends of the main frame 210.

Referring to Figures 20 and 21, the walker handle 230 may be retractable such that it is insertably coupled to the first and/or second end of the main frame 210. The walker handle 230 may be in an inserted state where the walker handle 230 is completely inserted into the first and/or second end of the main frame 210, and a withdrawn state where the walker handle 230 protrudes from the first and/or second end of the main frame 210. The walker handle 230 may be in a withdrawn state during the walker state of the ARS so that the user may hold the walker handle 230, and the walker handle 230 may be in an inserted state during the storage or charging state, the transport state, and the chair or donning state.

The walker handle 230 may include a handle storage member, handle receiver, or handle housing 232, and a handle member, handle insertion, or handle 234. Referring to FIG. 20, the housing 232 may be inserted and fixed inside of the main frame 210, or mounted through the main frame 210 on the lower surface 215 of the main frame 210. The housing 232 may be arranged between the lower surface 215 and the upper surface 214 at the first and/or second end of the main frame 210. The housing 232 may have a hollow cylindrical or pipe shape, and/or may have a hollow section and a solid section. The solid section may be a part of the housing 232 that separates hollow ends of the pipe shape of the housing 232 that couple to the handle member 234 and the walker handle 250. The handle 234 may be moveably or slideably coupled to the housing 232, and may insert into and may be withdrawn out of the housing 232.

Referring to FIG. 21, the main frame 210 may have a handle insertion portion, handle recess, handle groove, or concave insertion portion 215a provided in the lower surface 215 having a shape corresponding to a shape of the housing 232 and/or the walker handle 230. The handle groove 215a may have a hollow cylindrical cavity or have a hollow cylindrical recess formed on or recessed in an inner side of lower surface 215. A cross-section of the handle groove 215a may resemble a semicircular or semielliptical ring.

The main frame 210 may further include a handle bracket 219 having a plate shape and a hole through which the handle 230 is inserted. The handle bracket 219 may support the mounting of the walker handle 230 to a first and/or second end of the main frame 210. An insertion end of the handle 234 that penetrates the housing 232 may be coupled to an elastic member 240, and a grip end of the handle 234 may be the end of the handle 234 that a user holds when using the walker handle 230. The handle 234 may include a hollow section at the insertion end and a solid section at a grip end such that the elastic member 240 is provided inside the hollow section, and is pressed against a solid section when the handle 234 is inserted into the housing 232. An elastic force or restoring force of the elastic member 240 may assist in extraction of the handle 234 from the housing 232.

Referring to FIG. 22, the handle 234 may further include a fixing protrusion 234b provided on a first side of an outer circumferential surface of the handle 234, and, referring back to Figures 20-21, a receiving groove or receiving slit 234a provided on a second side of the outer circumferential surface of the handle 234. The second side of the outer circumferential surface of the handle 234 may be opposite to the first side. The elastic member 240 may be a spring.

The housing 232 of the walker handle 230 may receive the elastic member 240 and the insertion end of the handle 234 at a receiving end, which may include a first hollow section. When the handle 234 is inserted into the housing 232, the elastic member 240 may compress against the solid section of the housing 232. The first hollow section of the receiving end of the housing 232 may have a size and shape corresponding to a size and shape of the outer circumference or outer surface of the handle 234. The first hollow section of the receiving end of the housing 232 may have a length equal to or greater than a length of the handle 234 such that the handle 234 may be inserted into the housing 232 such that the handle 234 does not protrude out of the housing 232. However, embodiments disclosed are not limited to this configuration. For example, the housing 232 may be configured to allow a small portion of the handle 234 to protrude.

The housing 232 may further have a coupling end or coupling opening, which may include a solid section and/or a second hollow section. The coupling end of the housing 232 may couple to the transport handle 250. The second hollow section of the coupling end of the housing 232 may have a size and shape corresponding to a coupling portion or insertion end 252 of the transport handle 250. The solid section of the coupling end of the housing 232 may separate the first hollow section of the insertion end from the second hollow section of the coupling end such that the insertion end of the handle 234 does not contact the transport handle 250. An inner surface of the second hollow section of the coupling end of the housing 232 may have thread grooves or threading which correspond to thread grooves or threading located on an outer surface of the coupling portion 252 of the transport handle 250.

Referring to FIG. 22, the housing 232 of the walker handle 230 may further include first and second slots or first and second guide slots 232a and 232b configured to receive and guide the fixing protrusion 234b of the handle 234. The first slot 232a may longitudinally extend along the receiving end of the housing 232 on an outer circumferential surface, and may have a length smaller than a length from the receiving end of the housing 232 to the solid portion of the coupling end of the housing 232. The first slot 232a may have a width corresponding to a size, width, or diameter of the fixing protrusion 234b.

The second slot 232b may extend perpendicularly from the first slot 232a on the outer circumferential surface of the housing 232 and may have a width corresponding to a size, width, or diameter of the fixing protrusion and a length greater than a size of the fixing protrusion 234b, such that the second slot 232b may be configured to prevent a longitudinal movement of the fixing protrusion 234b and prevent further extraction of the handle 234 from the housing 232 by the restoring force of the elastic member 240.

When the handle 234 is inserted into the housing 232, the elastic member 240 may be compressed and the handle 234 may be stored in the housing 232. The housing 232 and/or the handle 234 may include a conventional spring loaded detent with a locking and releasing mechanism to keep the handle 234 stored in and to release the handle 234 from the housing 232. The receiving groove 234a may interact with a detent and/or locking and releasing mechanism inside of the housing 232 to keep the handle 234 inserted in the housing 232. The elastic member 240 may tilt toward the receiving groove 234a when it is compressed when the handle 234 is inserted into the housing 232. A user may press the grip end of the handle 234, and the handle 234 may be released by the releasing mechanism of the spring loaded detent such that a restoring or elastic force of the elastic member 240 pushes the insertion end of the handle 234 to extract the handle 234 out of the housing 232. The restoring force of the elastic member 240 may completely push the handle 234 along the entire length of the first slot 232a, or may partially push the handle 234 out of the housing 232, in which case, the user or assistant may pull the handle 234 out in a fully extended state of the handle 234 from the housing 232. Referring to FIG. 23, as the handle 234 is pushed and/or pulled out of the housing 232, the fixing protrusion 234b may be guided along the first slot 232a of the housing 232. Referring to Figures 24 and 25, once withdrawal of the handle 234 from the housing 232 is complete and withdrawn to a maximum amount, the user may rotate the handle 232 such that the fixing protrusion 234 is inserted into the second slot 232b, and the walker handle 230 may be maintained in a withdrawn state.

The restoring force and/or the elasticity of the elastic member 240 may be predetermined such that it pushes the handle 234 a predetermined amount or a predetermined length along the first slot 232a. For example, the restoring force of the elastic member 240 may be large or strong enough to push the handle 234 along the full length of first slot 232a such that the fixing protrusion 234b is adjacent to the second slot 232b. In another example, a smaller restoring force of the elastic member 240 may push the handle a predetermined length along the first slot 232a where, e.g. the fixing protrusion 234b reaches % the length of the first slot 232a, and the user pulls the handle 234 such that the fixing protrusion 234b guided along the rest of the length of the first slot 232a to fully extract the handle 234.

The walker handle 230 may naturally be maintained in a withdrawn or extended or partially withdrawn state when no further force by the user or the elastic member 240 is applied to the walker handle 230. That is, a natural state of the walker handle 230 may be when the walker handle 230 is withdrawn, and the elastic member 240 is not compressed or stretched. When the user or the assistant presses on the grip end of the handle 234, the handle 234 may be inserted back into the housing 234 against the restoring force of the elastic member 240, and may be fixed via a conventional spring loaded detent and locking mechanism. The walker handle 230 may be maintained in an inserted state when the user is not using the AARD B as a walker. The walker handle 230 may therefore not interfere or collide with the user, the assistant, and/or the exoskeleton A in the storage or charging states, the transport state, and the chair or donning state of the ARS.

The configuration and structure of the walker handle 230 may not be limited to the embodiments described herein, and other configurations may be used in the walker handle 230. For example, the handle 232 may be withdrawn via hydraulic pressure when a switch is pressed. As another example, there may not be any hydraulic pressure or spring force, and the handle 232 may simply be pulled out by the user and/or the assistant to put the walker handle 230 in a withdrawn state, and then pushed in by the user and/or the assistant such that the housing 232 covers the handle 234 to put the walker handle 230 in an inserted state in which the AARD B may be stored. In other words, the elastic member 240 is optional, and the walker handle 230 may properly function in both the inserted state and the withdrawn state even when the elastic member 240 is omitted.

Referring back to FIG. 20, the transport handle 250 may have a cylindrical or curved shape. The transport handle 250 may have a curved pipe shape or a semicircular or semielliptical shape such that it does not interfere with similar or identical transport handles of AARDs with which the ARS is stacked in the charging or storing state. The transport handle 250 may have a shape that bends upward. The transport handle 250 may have a shape that allows the assistant to quickly grab the transport handle 250 at any angle in urgent or unexpected situations, or may have a shape that allows the assistant to control and/or steer the transport handle 250 when the user is using the ARS in the walker state. The exoskeleton A may be decoupled from the AARD B in the walker state, and the user may wear the exoskeleton A.

Each end of the transport handle 250 may have the coupling portion 252 that couples to the main frame 210 and/or the coupling end of the housing 232 of the walker handle 230. Each coupling portion 252 may be press-fit into the coupling end of the housing 232, or the coupling portion 252 may include thread grooves on an outer circumferential surface of the coupling portion 252 that may correspond to thread grooves provided on an inner circumferential surface of the coupling end of the housing 232.

The assistant may primarily use the transport handle 250 in the transport state to transport the ARS from a storage location to a location where the user may use the ARS. The assistant may also use the transport handle 250 to assist the user in the walker state of the ARS. The walker handle 230 is primarily used by the user while using the ARS in the walking state. Since the AARD B has such a low center of gravity and weight is distributed according to the configuration of the lower support 100, the AARD B may stay stable even if a large force is applied to the walker handle 230 and/or the transport handle 250.

Referring to FIG. 26, the upper support 200 may further include the controller 500 of the AARD B. However, the placement of the controller 500 is not limited thereto. The controller 500 may wirelessly or electrically communicate with the main controller 2' or subcontroller 3' of the exoskeleton A. The controller 500 may include a control module 510 and a communication module 520. The controller 500 of the AARD B may communicate and exchange information with the main controller 2' and the subcontroller 3' of the exoskeleton A, and the communication module 520 of the controller 500 of the AARD B may wirelessly or electrically communicate with the communication module 2c of the main controller 2'. The controller 500 of the AARD B may further communicate with the drive assembly 300 and the charger 217 of the AARD B.

The controller 500 may receive information from the charger 217 to determine whether the exoskeleton A is coupled to the AARD B. The controller 500 may determine whether the exoskeleton A is coupled to and/or supported on the AARD B based on an intensity of a signal or communication signal between the communication module 520 of the controller 500 of the AARD B and the communication module 2c of the main controller 2' of the exoskeleton A.

The controller 500 may receive information from the pressure sensor in the foot support 7 to determine whether the foot is in contact with the floor surface. The controller 500 may also receive, from the main controller 2', an ascending or ascension signal and/or a descending or descension signal generated based on information in the position sensor 2b or based on a user's control of the main controller 2' and/or subcontroller 2'. The main controller 2' may generate an ascending signal when it senses an increase in height based on position information from the position sensor 2b, and may generate a descending signal when it senses a decrease in height based on position information from the position sensor 2b. The controller 500 may also receive information from the position sensor 2b in the main controller 2' in place of or in addition to an ascending or descending signal, and the controller 500 may further receive information from the drive assembly 300 and the movement or motion sensor 100a from the lower support 100. The controller 500 may determine heights of the exoskeleton A and the AARD B based on information from the main controller 2', the position sensor 2b, the drive assembly 300, and the motion sensor 100a. The controller 500 may further transmit information from the motion sensor 100a and/or the drive assembly 300 to the main controller 2' of the exoskeleton A.

The drive assembly 300 may include a height sensor or drive sensor 300a, and the controller 500 may receive information from the height sensor 300a to calculate a height of the AARD B. The height sensor 300a may sense an operation of a drive 350 described in the Drive Assembly section of this specification. The controller 500 may determine that the AARD B is in a standing or walker state based on the calculated height of the AARD B, or may determine that the AARD B is in a seated or chair state.

### Drive Assembly of the AARD

Referring back to Figures 14 and 15, the drive assembly 300 may couple the lower support 100 to the upper support 200, and may control a height of the upper support 200. The drive assembly 300 may include the lower pipe or shaft 310, and an upper bar, shaft or pipe 330 moveably or slideably connected to the lower shaft 310, and a drive 350 to raise and lower the upper shaft 330. The lower shaft 310 may be inserted into the upper shaft 330, or the upper shaft 330 may be inserted into the lower shaft 310. For example, the lower shaft 310 may be hollow, and an inner circumferential surface of the lower shaft 310 may have a size that corresponds to a size of an outer circumferential surface of the upper shaft 330. Alternatively, the upper shaft 330 may be hollow, and an inner circumferential surface of the upper shaft 330 may have a size that corresponds to a size of an outer circumferential surface of the lower shaft 310. The upper shaft 330 and the lower shaft 310 may partially overlap with each other, especially when the AARD B is in the seated state and/or the ARS is in the donning or chair state.

The upper and lower shafts 330 and 310 may have a cylindrical shape, square shape or square tube shape, or rectangular tube shape, but shapes of the upper and lower shafts 310 and 330 are not limited thereto. For example, the upper and lower shafts 330 and 310 may be square pipes, where a cross-sectional area of the upper shaft 330 may be smaller than a cross-sectional area of the lower shaft 310. Cross-sectional shapes of the upper and lower shafts 330 and 310 may be different as long as the upper shaft 330 can be inserted into the lower shaft 310, or vice versa. As another example, the lower shaft 310 may have a cylindrical shape, while the upper shaft 330 may have a cylindrical shape having a flat edge or plate edge.

The drive 350 may include a hydraulic linear actuator (e.g., a hydraulic cylinder shown in Figure 16), a pneumatic linear actuator, and electrical actuator, or a motor with a gear set. The hydraulic cylinder of the drive 350 may be provided within the lower shaft 310 and/or the upper shaft 330. The drive 350 may raise and lower the upper shaft 330 via an electronic switch and/or a pedal 352. The controller 500 of the AARD B may also control the drive 350. The lower shaft 310 may be static with respect to the lower support 100. The lower shaft 310 may be provided in the pipe grooves 154c of the first and second blocks 154a and 154b of the lower support 100 such that the first and second blocks 154a and 154b hold and or surround the lower shaft 310. The first and second blocks 154a and 154b of the lower support 100 may support the base frame 110, the subframe 130, and the lower shaft 310 and the drive assembly 300.

Referring to FIG. 26, the drive assembly 300 may further include the height sensor 300a that senses a driving direction, e.g., ascending or descending, and a driving amount, e.g., time and/or amount of force, of the drive 350, or by how much the drive 350 has raised or lowered the upper shaft 330. The height sensor 300a may sense an operation of the drive so that the controller 500 can calculate a height of the upper pipe. The height sensor 300a may, for example, include a laser distance sensor that uses a laser beam to measure a distance to the ground or floor surface. The AARD B may be in a standing state when the upper shaft 330 is at a height that is at or greater than a predetermined walker height. The AARD B may be in a seated state when the height of the upper shaft 330 is at a height that is at or below a predetermined chair height. See, for example, Figures 33 - 35, which show the AARD B in a seated state. When the AARD B transitions to a seated state, a movement of the upper pipe 330 can be limited by a fixing structure (not shown).

The controller 500 of the AARD B may receive information from the height sensor 300a and may calculate a height of the AARD B based on information about the height of the upper shaft 330, and may determine that the AARD B is in a standing state when the calculated height of the AARD B is equal to or greater than a height corresponding to a walker height of the upper shaft 330. See, for example, Figures 37-39, which show the AARD B in a standing state. The controller 500 may determine that the AARD B is in a seated state when the calculated height of the AARD B is equal to or less than a height corresponding to a chair height of the upper shaft 330. When the AARD B is in a seated state, the controller 500 may determine that the ARS is in a donning or chair state, as exemplified in Figures 12, 31, and 32.

The ARS may include a control system, which includes the main controller 2' and the subcontroller 3' of the exoskeleton A, and the controller 500 of the AARD B. The control system may determine what state the ARS is in based on the states and/or heights of the exoskeleton A and the AARD B. Both the controller 500 and the main controller 2' may calculate the state of the ARS by communicating with each other.

For example, the control system may determine that the ARS is in a charging state based on information from the charger 217. The control system may determine that the ARS is in a storage state, such as the state shown in FIG. 10, when (1) the main controller 2' determines that the exoskeleton A is in a standing state, (2) when the controller 500 determines that the AARD B is in a standing state, (3) when the controller 500 determines that the wheels 114 and/or subwheels 132 are not moving based on information from the motion sensor 100a and/or braking signal, and/or (4) when the main controller 2' and/or controller 500 determines that the exoskeleton A is coupled to the AARD B based on the signal between the communication module 2c of the main controller 2' and the communication module 520 of the controller 500. See, for example, Figures 27-28, which show an ARS that may have been determined to be in a storage state. The controller 500 may further determine that the ARS is in a storage state when (5) it determines that the foot support 7 of the exoskeleton A contacts a floor surface based on information in the pressure sensor.

The control system may determine that the ARS is in a transport state, as exemplified in FIG. 11, (1) when the main controller 2' determines that the exoskeleton A is in a standing state, (2) when the controller 500 determines that the AARD B is in a standing state, (3) when the controller 500 determines that the wheels 114 and/or subwheels 132 are moving based on information from the motion sensor 100a, and/or (4) when the main controller 2' and/or controller 500 determines that the exoskeleton A is coupled to the AARD B based on the signal between the communication module 2c of the main controller 2' and the communication module 520 of the controller 500. The control system may further determine that the ARS is in a transport state (5) when it determines that the foot support 7 is not in contact with the floor surface based on information from the pressure sensor.

Since heights of the AARD B and the exoskeleton A may be similar in the storage, transport, and walker states of the ARS, the control system may distinguish the transport state from the walker state and/or the storage state based on whether the foot support 7 of the wearable assistive device is in contact with the floor surface based on information from the pressure sensor in the foot support 7, and/or based on whether the AARD B is moving based on information from the motion sensor 100a or braking signal in the wheels 110 or subwheels 130.

The control system may determine that the ARS is in a donning or chair state, as exemplified in FIG. 12, (1) when the main controller 2' determines that the exoskeleton A is in a seated state, (2) when the controller 500 determines that the AARD B is in a seated state, and (3) when the controller 500 and/or the main controller 2' determines that the exoskeleton A is coupled to or very close to the AARD B based on an intensity of a communication signal or signal between the communication module 2c of the main controller 2' and the communication module 520 of the controller 500. Figures 31 and 32 further exemplify a donning or chair state of the wearable assistive device support system. In the donning or chair state, the user may be wearing the exoskeleton A while also being seated on the AARD B, or the exoskeleton A may be coupled to the AARD B and be ready for the user to don.

The control system may determine that the ARS is in a walker state, as exemplified in FIG. 13, (1) when the main controller 2' determines that the exoskeleton A is in a standing state, (2) when the controller 500 determines that the AARD B is in a standing state, and (3) when the main controller 2' and/or the controller 500 determines that the exoskeleton A is detached from the AARD B based on the communication signal between the communication module 2c of the main controller 2' and the communication module 520 of the controller 500. The control system may further use information from the motion sensor 100a and/or the braking signal of the lower support 100 to determine whether the user is using the AARD B as a walker. Figures 37-39 may further exemplify the AARD B in a walker state of the ARS.

### Chair or Seat Assembly of the AARD

Referring to FIG. 33, the chair or chair assembly 400 may include a seat 420 in which a user sits during the donning or chair state of the ARS. Referring to FIG. 36A, the chair assembly 400 may further include a seat frame or seat base 410, a link frame 440, a seat link 450, and a link bracket 460. The seat 420 may be provided on the seat frame 410. The link bracket 460 may be provided on the link frame 440. The link frame 440 and the link bracket 460 may couple to the seat frame 410, and the link bracket 460 may be provided between the link frame 440 and the seat frame 410. The seat link 450 may couple to the link bracket 460.

The seat frame 410 may include a seat plate 418, bottom frame 416, and top frame 412. An adhesive layer or top layer 419 may be provided between the seat 420 and the top frame 412. The seat 420 may adhere via adhesive layer 419 to the top plate 412. The top frame 412 may be press/friction fitted onto the bottom frame 416, or may be secured via a resin or glue. A recess 412b of the top frame 412 may be press/friction fitted onto an inner portion of ledges 416b of the bottom frame 416. The bottom frame 416 may be coupled to the bottom seat plate 418 via a plurality of screws.

The link bracket 460 may be provided between the bottom frame 418 and the link frame 440. The link bracket 460 may have a shape that fits onto the link frame 440, and the details of the link bracket 460 and its shape will be described later. The link bracket 460 may be coupled to the bottom frame 416 and/or seat plate 418 via a plurality of screws. The link frame 440 can be coupled to the seat plate 418 and/or the bottom frame 416 of the seat frame 410 by providing a coupling structure on an upper surface that faces the seat frame 410. For example, the link frame 440 may be coupled to the bottom seat plate 418 and/or the bottom frame 416 via a plurality of screws.

Each of the seat 420, adhesive layer or top layer 419, top frame 412, bottom frame 416, seat plate 418, and link bracket 460 may have recesses that are shaped to correspond to an outer contour of the upper shaft 330 so that the chair assembly 400 does not interfere with the upper shaft 330 when the AARD B transitions between standing or seated states. Outer perimeters of the seat 420, adhesive layer 419, top frame 412, bottom frame 416, seat plate 418, and link frame 440 may have similar or the same dimensions such as similar lengths and widths so that a shapes and sizes of the seat 420, the seat frame 410, and the link frame 440 may be the same or similar.

The seat 420 may have a soft or shock absorbing material to provide comfort to the user. A material capable of absorbing shock may be attached to the seat 420, or the seat 420 itself may be made from a shock absorbing material. An upper surface of the seat frame 410 may couple to a lower surface of the seat 420. A shape of the seat 420 may correspond to a shape of the seat frame 410, or may be appropriately shaped to conform with a buttocks of the user when the user sits in the seat 420. The seat 420 may be integrally formed with the seat frame 410, or may be separately manufactured to be coupled to the seat frame 410.

The seat frame 410 may form an appearance of a chair, and may have a width that recedes away from the drive assembly 300 so that when the user sits in chair, the seat is wider near the user's back and narrower near the user's legs. When the user sits in the chair, leg of the user may naturally extend slightly outward. Therefore, the seat frame 410 may have such a shape that the area thereof is smaller further away from the drive assembly 300. At an end of the seat frame 410, a height of a center portion of the seat frame 410 may be formed slightly higher than a periphery thereof so that a top surface of the seat frame 410 naturally corresponds to a form of the user. Outer sides of the seat frame 410 at the front end thereof may curve downward or be lower than the central portion of the seat frame 410. The seat 420 and/or the seat frame 410 may be shaped to correspond to a user's body.

Referring to FIGs. 33-34, a lower surface of the seat frame 410 may couple to the link frame 440. The width of the seat frame 410 may decrease away from the upper shaft 330 so that a width of the front end of the seat frame 410 may be less than a width of a back end of the seat frame 410. The seat frame 410 may further include a sub-supporter, sub-support, side support, or side portion 430 provided on each side of the seat 420. The side support 430 may be provided on an upper side of the seat frame 410. The side support 430 may have a predetermined thickness and may have rounded corners. Each side support 430 may have a hexahedral or hexahedron shape or may have a shape and location to align with the leg insert 216. Each corner of the side support 430 may be curved or formed in a streamlined shape. Each side support 430 may have a length that is less than a length of the seat. Each side support 430 may be adjacent to the seat 420.

The side support 430 may support the leg 6 of the AARD B when the ARS is in the chair state. When the AARD B transitions from a standing state to a seated state while the exoskeleton A is coupled to the AARD B, the section of the leg 6 coupled to the leg insert 216 may decouple from the leg insert 216 or be displaced or moved. The side support 430 may then support the weight of the leg 6. When the AARD B transitions to a seated state, the side support 430 may guide and orient the leg 6 such that it is supported outside of a main space of the seat 420, leaving room for the user to sit in the seat 420 in the donning state. In the chair state of the ARS, exemplified in FIG. 32, the legs 6 may be spread apart from each other so that the user may comfortable sit in the AARD B and prepare to wear the exoskeleton A.

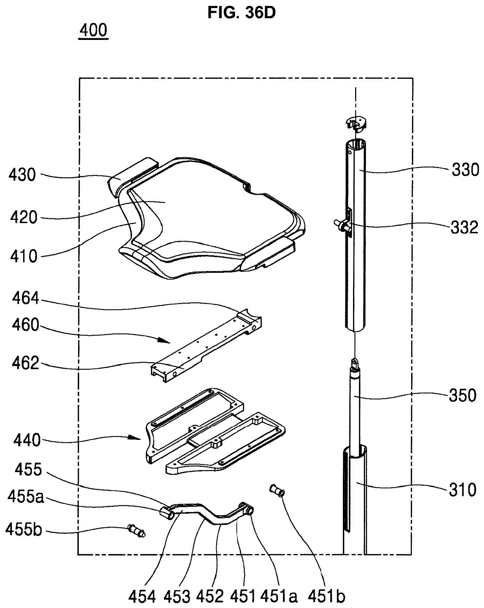

Referring to Figures 34 and 36, the link bracket 460 provided on the link frame 440 may couple to the seat link 450. The link frame 440, the link bracket 460, and the seat link 450 may be coupled in a lower surface of the seat frame 410. Referring to FIG. 35, the link frame 440 may have a hole or cut portion in which a first end or a chair end of the seat link 450 may be inserted. Alternatively, the seat link 450 may rotatably couple to a lower surface of the seat frame 410.

Referring to FIG. 36A, the link bracket 460 may be bar-shaped and may be installed between the seat frame 410 and the link frame 440. The link bracket 460 may be arranged to run across the seat frame 410 and the link frame 440 in a forward and rearward direction. The link bracket 460 may be arranged in the same manner as a longitudinal arrangement of the seat link 450.

The link bracket 460 may be formed so that it fits into the link frame 440 (see FIG. 36D). The link frame 440 may have first and second openings, spaces, or cut portions. The link bracket 460 may have first and second ends, where each of the first and second ends may have a shape that fits or inserts into the first and second openings of the link frame 440. The first and second ends of the link bracket 460 may each have a height that is similar to or the same as a height of the first and second openings of the link frame 440 so that the link bracket 460 sits flush with the link frame 440. The link frame 440 may further have a coupling portion that couples to a recess in the link bracket 460. The recess of the link bracket 460 may fit on top of the coupling portion of the link frame 440, while the first and second ends of the link bracket 460 fit inside of the first and second openings of the link frame 440 so that a top surface of the link bracket 460 and a top surface of the link frame 440 may form a continuous surface.

The link bracket 460 may have a configuration to stably support a weight applied to the seat frame 410 and to reinforce a strength of the link frame 440 and/or the chair assembly 400. The link bracket 460 may be coupled to the seat frame 410 by a plurality of screws. Since the link bracket 460 may be inserted between the seat frame 410 and the link frame 440, a length of the link bracket 460 may not exceed a length of the link frame 440. Further, a width and height of the link bracket 460 may also be set in consideration of a coupling of the seat frame 410 and the link frame 440 and the width of the seat link 450, for example. The second end of the link bracket 460 may have a recess corresponding to a shape of an outer peripheral surface of the upper shaft 330.

The link bracket 460 may include a link rotation support portion 462 at the first end of the link bracket 460, and a seat rotation supporting portion 464 may be formed at the second end of the link bracket 460. Both side surfaces of first and second ends of the link bracket 460 may extend downward within the link frame 440.

The link rotation supporting portion 462 may include a hole into which a second hinge pin 455b is inserted. The chair end of the seat link 450 may extend and penetrate a cut portion or opening of the link frame 440 to be rotatably coupled to the link bracket 460 via the second hinge pin 455b. The seat link 450 may have first and second hinge knuckles or hinge portions 451a and 455a. First hinge pin 451b may be inserted into first hinge knuckle 451b, which may couple to the first and second coupling pins 154f and 154e of the inner shell 154 of the lower housing 150. Second hinge pin 455b may be inserted into second hinge knuckle 455a of the seat link 450, and the second hinge pin 455b may be inserted into a hole or holes of the link rotation supporting portion 462 of the link bracket 460.

The seat rotation supporting portion 464 may include at least one hole in the link bracket 460 into which a hinge shaft 334 in a seat coupling hinge or hinge housing 332 may be inserted. The seat coupling hinge 332 may have a hinge bracket 332a and a hinge knuckle or hinge shaft 332b that fix to a mounting groove or hinge groove 330a of the upper shaft 330. The upper shaft 330 may have a flat edge to allow easy coupling of the seat coupling hinge 332 to the upper pipe 330, in which case the mounting groove 330a may be optional. The chair assembly 400 may therefore couple to the upper shaft 330 via the seat rotation supporting portion 464 of the link bracket 460 and the seat coupling hinge 332 and the hinge shaft 334 of the upper shaft 330.

A first end or chair end of the seat link 450 may rotatably couple to the link bracket 460 via the second hinge knuckle 455a and second hinge pin 455b, while a lower housing end or second end of the seat link 450 may couple to the lower housing 150 via the first hinge knuckle 451a and the first hinge pin 451b. The seat link 450 may therefore couple the chair assembly 400, at the link bracket 460, to the lower housing 150 at the inner shell 154.

Referring to Figures 16-17, the lower housing end of the seat link 450 may be inserted into the seat-link hole 1522 of the seat-link shell 152a. The first hinge knuckle 451a of the seat link 450 may, via first hinge pin 451b, rotatably couple to inner shell 154 through the seat-link hole 1522 of the seat link shell 152a. The seat-link hole 1522 may have a shape that corresponds to or accommodates the seat link 450 so that the seat link 450 may rotate without interference. First and second coupling pins 154f and 154e of the inner shell 154 may be inserted into first hinge pin 451b. The first hinge knuckle 451a and/or the first hinge pin 451b may be fixed or coupled to the first and second coupling pins 154f and 154e after the coupling pin 154f is inserted into the coupling hole of the second coupling pin 154e so that the seat link 450 may be secured to the inner shell 154.

The first and second hinge knuckles 451a and 455a may be appropriately sized or configured to accommodate first and second hinge pins 451b and 455b. The first hinge 451b may be hollow or have a cavity to couple to the coupling pins 154f and 154e.

The seat link 450 may be a rigid, longitudinal structure comprised of rigid segments that bend relative to each other. The seat link 450 may have a bar shape bent at a plurality of points at different angles. This shape of the seat link 450 may avoid an interference with a peripheral structure. The seat link 450 may have at least one bend. The bends of the seat link 450 may be configured so that it does not interfere with the lower shaft 310 or the seat frame 410 when it rotates during transitions of the AARD B between seated and standing states.

A structure of the seat link 450 will be described in more detail as follows. Referring to FIG. 36C, a first direction or folding direction may be direction C, and a second direction or an unfolding direction may be direction D. As shown in FIG. 36C, the seat link 450 may include a first link portion 451 provided with the first hinge knuckle 451a coupled to the inner shell 154 and penetrated through the seat-link hole 1522, a second link portion 452 bent toward direction C from the first link portion 451, a third link portion 453 bent toward direction C from the second link portion 452, a fourth link portion 454 bent toward direction D from the third link portion 453, and a fifth link portion 455 bent toward direction D from the fourth link portion 454 and provided with the second hinge knuckle 455a.

The first hinge knuckle 451a in which the first hinge pin 451b is inserted may be formed at a first end of the first link portion 451. The first hinge knuckle 451a may, via first hinge pin 451b, be rotatably coupled to the inner shell 154 through the seat-link hole 1522. The first link portion 451 may be formed parallel to a floor surface in a seated state or chair state. The length of the first link portion 451 may be equal to a length of the inclined portion 152a-1of the first shell 152a, as shown in FIG. 36B.

The second link portion 452 may extend from the first link portion 451 at a first predetermined angle toward direction C. The second link portion 452 may be bent so that an angle toward direction C may have or form an obtuse angle with the first link portion 451. The length of the second link portion 452 may be equal to a length the upper surface 152a-2 above the inclined surface 152a-1, as shown in FIG. 36B.

A bent shape and the length of the first link portion 451 and the second link portion 452 may prevent an interference between the seat link 450 and the outer shell 152. Thus, the first link portion 451 and the second link portion 452 may have a contour corresponding to an upper surface of the outer shell 152. The first link portion 451 and the second link portion 452 may have a form corresponding to a silhouette or surface area shape of the outer shell 152 at the sink-link hole 1522, the inclined surface 152a-1, and the upper surface 152a-2 above the inclined surface 152a-1.

The length of the first link portion 451 may correspond to the length of the inclined portion 152a-1, and the length of the second link portion 452 may correspond to the length of the upper surface of the inclined portion 152a-2. A bent angle of the first link portion 451 and the second link portion 452 may also correspond to a shape in the vicinity of the seat-link hole 1522 of the first frame 152a for the same reason. Therefore, an interference between the seat link 450 and the lower housing 150 can be prevented when the chair assembly 400 is switched from a standing state to a seated state, or a chair state to a non-chair state.

The third link portion 453 may extend from the second link portion 452 at a second predetermined angle toward direction C. The third link portion 453 may be bent so that an angle toward direction C may have or form an obtuse angle with the second link portion 452. The fourth link portion 454 may extend from a third link portion 453 at a third predetermined angle toward direction D. The fourth link portion 454 may be bent so that an angle toward direction D may have or form an obtuse angle with the third link portion 453. The fifth link portion 455 may extend from the fourth link portion 454 at a fourth predetermined angle toward direction D. The fifth link portion 455 may be bent so that an angle toward direction D may have or form an obtuse angle with the fourth link portion 454. The second hinge portion 455a, through which a second hinge 455b may be rotatably supported or inserted, may be formed at an end of the fifth link portion 455. The fifth link portion 455 may be formed parallel to a floor surface in a chair state or seated state.

In the seated state, the first hinge knuckle 451a and the second hinge knuckle 455a of the seat link 450 and the seat coupling hinge 332 coupled to the upper pipe 330 may form a triangle. In either a standing state or seated state, centers of the first hinge knuckle 451a and the seat coupling hinge 332 may be arranged on the same line. Referring to FIG. 36B, in a standing state, centers of the first hinge knuckle 451a, the second hinge knuckle 455a, and the seat coupling hinge 332 may be arranged on the same line parallel and/or formed to be parallel to a longitudinal direction of the upper pipe 330.

Referring to FIG. 36, when there is one seat link 450, the seat link 450 may be centrally positioned under the link bracket 460, as the second hinge pin 455b inserted in the second hinge knuckle 455a may be coupled to holes on both sides of the seat coupling portion 462 of the link bracket 460. The position of the seat link 450 may maintain a center of gravity of the seat frame 410. Thus, the seat link 450 can stably support the seat frame 410.

Although not shown in the drawings, in an alternative embodiment, two seat links 450 may be provided. When there are two seat links 450, each may have a first end or first hinge structure coupled to the lower housing 150 and each may have a second end that has a shape that supports both sides of the link frame 440 and/or the link bracket 460. A portion in which the seat link 450 and the link frame 440 may be coupled may be a portion which can maintain a center of gravity of the seat frame 410. Alternatively, in another embodiment, the seat link 450 may be provided with a hydraulic cylinder, and a piston structure, or the like, not in a form of a bar. Even in this case, one end of the hydraulic cylinder can be rotatably coupled to the lower housing 150. Further, one end of the piston coupled to the hydraulic cylinder may be coupled to the link frame 440 and/or link bracket 460. The hydraulic cylinder and the piston can be coupled to the same point as the seat link 450 to maintain a center of gravity of the seat frame. The seat link 450 may be coupled to the link bracket 460 inserted between the seat frame 410 and the link frame 440 and rotatably supported.

The adhesive layer 419 may be a resin or adhesive material that secures the seat 420 to the top frame 412 of the seat frame 410. A bottom surface of the seat plate 418, may be coupled to the upper surface of the link frame 440 such that it covers the upper surface of the link frame 440 and the link bracket 460. A recess or groove 416a may be formed within a side of the bottom frame 416 to prevent interference of the seat frame 410 with the upper shaft 330 when the AARD B is in a seated state or during a transition between the seated and standing states. The recess 416a may have a partial cylindrical shape that may correspond to an outer contour of the upper shaft 330. The recess 416a may have a concave shape that the upper shaft 330 may pass through the recess 416a when the AARD B has transformed. The top frame 412 may have a similar recess or groove 412a, and may have a recess 412b that accommodates supporters or ledges 416b of the bottom frame 416 that couple to the side supports 430. In this embodiment, recesses 412a and 416a are shown as concave shaped, but may be different based on an outer contour of the upper and/or lower shafts 330 and 310. For example, if the upper shaft 330 has a square shaped contour, the recesses 412a and 416a may be "["-shaped or "⊏"-shaped.

As can be appreciated, the shape of the recesses in the seat 420, seat frame 410, and link bracket 460 may have shapes that fit onto or accommodate the shape of the upper shaft 330. If the upper shaft 330 has a cylindrical shape with a flat edge, then the recesses in the seat 420, seat frame 410, and link bracket 460 may have a straight portion so that the seat 420, seat frame 410, and link bracket 460 may be in close contact with the upper shaft 330.

A top cap or cap may be provided on top of upper shaft 330 to close the upper shaft 330. The top cap may be optional, and may be a decor provided on top of upper shaft 330. Upper shaft 330 may be inserted into the lower shaft 310 and over the drive 350, which may be a hydraulic cylinder. The top cap may also be provided in the upper support 200.

To achieve additional height of the upper support 200, a third shaft, pipe, or bar may be provided in and/or inserted into upper shaft 330. The third shaft may couple to the upper support 200. The third shaft may be further driven to a height higher than the upper shaft 330 to insert out of or protrude out of the upper shaft 330. The hydraulic cylinder of the drive 350 may push the third shaft with the upper support 200, and the third shaft may be pushed beyond the upper shaft 330 to further adjust the height of the AARD B. The AARD B may therefore have an adjustable height to accommodate users of various heights and sizes, and to enhance convenience for the users who use the AARD B in the walker state.

The top cap may further fix to the drive 350 and the upper shaft 330 to maintain a stability of the drive 350 within the upper shaft 330, and the upper shaft 330 may be pushed upward by the hydraulic cylinder. The top cap may be rigidly fixed to upper shaft 330 and drive 350 to provide sufficient strength to maintain the drive 350 within the upper shaft 330 and to support the upper shaft 330 and the upper support 200 when the drive 350 raises the upper shaft 330. The top cap may further fix to the main frame 210 of the upper support 200.

Referring to Figures 28 and 39, when the AARD B is in a standing state, the upper shaft 330 may have a height equal to or greater than the predetermined walker height, and may overlap with the lower shaft 310 by less than or equal to a first predetermined overlapping length. Referring to Figures 37 and 38, the seat 420, seat frame 410, and each side support 430 may be parallel to the upper shaft 330 and/or perpendicular to the floor surface. The seat link 450 may roughly extend in a vertical or transverse direction such that the first end or the chair end of the seat link 450 is also parallel to the upper shaft 330 and/or perpendicular to the floor surface. Each of the seat 420, seat frame 410, and each side support 430 may not contact the leg 6 of the exoskeleton A when the exoskeleton A is stored or supported on the upper support 200.

Referring to Figures 29 and 30, the pedal 352 or the controller 500 may control the drive 350 to lower the upper shaft 330 to convert the AARD B from a standing state to a seated state. The AARD B may have a diminishing height H as it descends. The user or the assistant may also apply a downward force to the upper support 200 that is greater than a predetermined force to manually lower the upper shaft 330. As the upper shaft 330 lowers, the first end of the seat frame 410 is lowered. Since the second end of the seat frame 410 coupled to the lower housing 150 cannot lower, the first end of the seat frame 410 rotates outward from the upper shaft 330, and the second end of the seat frame 410 rotates outward such that the chair end of the seat link 450 is also pushed outward.

When the upper shaft 330 descends, it is further overlapped with the lower shaft 310. If the exoskeleton A is coupled to the AARD B, the angles θ1 and θ2 may be adjusted such that the exoskeleton A converts to a seated state. An angle θ3 between the upper leg frame 6a and the floor surface may diminish as the upper shaft 330 descends, along with an angle θ4 between the foot support 7 and the floor surface. As the seat frame 410 descends, a rear side of the seat frame 410 located closer to the upper pip 330 may also be gradually lowered.

Referring to Figures 31 and 32, when the upper shaft 330 descends to past the predetermined chair height, the AARD B may be in a seated state. The upper shaft 330 may overlap with the lower shaft 310 by greater than or equal to a second predetermined overlapping length. The seat 420, seat frame 410, and each side support 430 may be perpendicular to the upper shaft 330 and/or parallel to the floor surface. The recesses of the seat 420 and/or the seat frame 410 may allow the upper shaft 330 to pass therethrough. For example, the seat frame 410 may have a recess including top and bottom recesses or recesses 412a and 416a (see FIG. 36A). The seat link 450 may roughly extend in a horizontal or lateral direction such that the second end or the lower housing end of the seat link 450 is also parallel to the floor surface and/or perpendicular to the upper shaft 330. The side support 430 may support the leg 6 of the exoskeleton A. Each side support 430 may be arranged in the leg insert 216, or may be arranged close to or adjacent to the leg insert 216. The side support 430 may have a shape corresponding to a shape of the leg insert 216, and may be inserted into the leg insert 216 when the AARD B is in a seated state.

The seat frame 410 may completely descend to be perpendicular to the upper pipe 330. Accordingly, the seat 420 may be perpendicular to the upper pipe 330 and may be parallel to the floor surface. The leg 6 of the exoskeleton A may be in a state where the upper leg frame 6a is parallel to the seat 420. Further, the leg 6 may be set so that the leg 6 extends outward by a predetermined angle by corresponding to a sitting posture of the user. Since a posture in which the leg of the user extends outward slightly is a comfortable posture when the user sits, the leg 6 may also be set in a form corresponding thereto. Further, in the leg 6, a lower leg frame 6d may be perpendicular to the floor surface.

In a donning or chair state of the ARS, a user may easily sit in the seat 420 even while the exoskeleton A is coupled to the AARD B. The user may then don the exoskeleton A via the leg belt 6c of the leg 6, the pelvic and/or waist frame 5, and/or a strap of the foot support 7.

Embodiments herein disclose a wearable assistive device support system that stackably stores with other wearable assistive device support systems, charges the wearable assistive device in a storing state, is able to be transported by an assistant from a storage location to a rehabilitation location or facility, converts to a chair when a user desires to don the wearable assistive device, provides an easy coupling and decoupling of the wearable assistive device, and converts into a stable walker that a user may use as extra support. Embodiments disclosed herein are not limited to medical or physical training centers, and may be used in military, residential, or commercial settings, as well.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

## Claims

1. An adaptive assistive and/or rehabilitation device (B), comprising:
an upper support (200) for supporting a wearable assistive device on a user side; and
a lower support (100) coupled to a lower side of the upper support (200) to move and support the upper support (200), wherein the lower support (100) includes a base frame (110) extending on the user side and a sub-frame (130) extending on an assistant side opposite to the user side,
**characterized in that** the device further comprises a lower housing (150) provided in the lower support (110),
wherein the lower housing (150) is coupled to the base frame (110) and the sub-frame (130) to support the base frame (110) and the sub-frame (130), and
wherein the lower housing (150) includes:
an outer shell (152) through which the base frame (110) and the sub-frame (130) are inserted,
an inner shell (154) provided inside of the outer shell (152), wherein the base frame (110) and the sub-frame (130) are coupled to the inner shell (154), and
a balance weight (156) provided inside of the outer shell (152) and arranged below, inside or surrounding the inner shell (154) to add weight to the lower support (100).

2. The adaptive assistive and/or rehabilitation device (B) of claim 1, wherein the base frame (110) has a U-shape that opens toward the user side, and the sub-frame (130) has a U-shape smaller than the U-shape of the base frame and opens toward the assistant side.

3. The adaptive assistive and/or rehabilitation device (B) of claim 1, wherein the base frame (110) and the sub-frame (130) are arranged to extend downward toward a floor surface, and wherein a center of the base frame (110) is coupled to the lower housing (150) at a position higher than a position where the sub-frame (130) is coupled to the lower housing (150).

4. The adaptive assistive and/or rehabilitation device (B) of any one of claims 1 to 3, wherein at least one wheel is installed at each of first and second ends of the base frame (110) and the sub-frame (130), and the wheel (132) coupled to the sub-frame (130) is larger than the wheel (114) coupled to the base frame (110).

5. The adaptive assistive and/or rehabilitation device (B) of any one of the preceding claims, wherein the upper support (200) includes a handle for a user to hold.

6. The adaptive assistive and/or rehabilitation device (B) of claim 2, wherein the width of first and second ends of the sub-frame (130) is smaller than the width of first and second ends of the base frame (110).

7. The adaptive assistive and/or rehabilitation device (B) of any one of the preceding claims, insofar as being dependent on claim 3, further comprising a drive assembly (300) supporting the upper support (200) and configured to raise and lower the upper support (200),
wherein the lower housing (150) is coupled to a lower side of the drive assembly (300) to support the upper support (200) and the driving assembly (300).

8. The adaptive assistive and/or rehabilitation device (B) of claim 2, wherein first and second centers of the U-shapes of the base frame (110) and sub-frame (130), respectively, are coupled to the lower housing, and the second center of the U-shape of the sub-frame (130) is positioned between the first center of the U-shape of the base frame (110) and the balance weight (156).

9. The adaptive assistive and/or rehabilitation device (B) of any one of the preceding claims, insofar as being dependent on claim 3, wherein the base frame (110) includes first and second extensions to form the U-shape, the first extension of the base frame (110) being coupled to a third side of the lower housing (150), and the second extension of the base frame (110) being coupled to a fourth side of the lower housing (150).

10. The adaptive assistive and/or rehabilitation device (B) of claim 9, wherein the sub-frame (130) includes first and second extensions to form the U-shape, wherein the first extension of the sub-frame (130) is coupled to the third side of the lower housing (150) at a position lower than where the first extension of the base frame (110) is coupled, and the second extension of the sub-frame (130) is coupled to the fourth side of the lower housing (150) at a position lower than where the second extension of the base frame (110) is coupled.

11. The adaptive assistive and/or rehabilitation device (B) of claim 10, wherein the lower housing (150) includes first and second top grooves and first and second bottom grooves, wherein the first and second extensions of the base frame (110) are coupled to the first and second top grooves, and the first and second extensions of the sub-frame (130) are coupled to the first and second bottom grooves.

12. The adaptive assistive and/or rehabilitation device (B) of claim 10, wherein the first extensions of the base frame (110) and the sub-frame (130) each have first ends, the second extensions of the base frame (110) and the sub-frame (130) each have second ends, wherein wheels are provided on the first and second ends of the base frame (110) and the sub-frame (130), and wherein the wheels provided on the first and second ends of the sub-frame (130) are heavier than the wheels provided on the first and second ends of the base frame (110).

13. An assistive and/or rehabilitative system comprising an adaptive assistive and/or rehabilitative device (B) of any one of the preceding claims, and a wearable assistive device supported by the adaptive assistive and/or rehabilitative device (B).

## Patentansprüche

1. Adaptive Hilfs- und/oder Rehabilitationsvorrichtung (B) mit:
einem oberen Träger (200) zum Halten eine tragbaren Hilfsvorrichtung auf einer Benutzerseite; und
einem unteren Träger (100), der mit der Unterseite des oberen Trägers (200) gekoppelt ist, um den oberen Träger (200) zu bewegen und zu halten, wobei der untere Träger (100) einen Grundrahmen (110), der sich auf der Benutzerseite erstreckt, und einen Hilfsrahmen (130) aufweist, der sich auf einer der Benutzerseite gegenüberliegenden Assistenzseite erstreckt,
**dadurch gekennzeichnet, dass** die Vorrichtung ferner ein unteres Gehäuse (150) aufweist, das im unteren Träger (110) vorgesehen ist,
wobei das untere Gehäuse (150) mit dem Grundrahmen (110) und dem Hilfsrahmen (130) gekoppelt ist, um den Grundrahmen (110) und den Hilfsrahmen (130) zu halten, und wobei das untere Gehäuse (150) aufweist:
eine äußere Hülle (152), durch die der Grundrahmen (110) und der Hilfsrahmen (130) eingesetzt sind,
eine innere Hülle (154), die innerhalb der äußeren Hülle (152) vorgesehen ist, wobei der Grundrahmen (110) und der Hilfsrahmen (130) mit der inneren Hülle (154) gekoppelt sind, und
ein Ausgleichsgewicht (156), das innerhalb der äußeren Hülle (152) vorgesehen ist und unter, innerhalb oder die innere Hülle (154) umgebend angeordnet ist, um dem unteren Träger (100) Gewicht hinzuzufügen.

2. Adaptive Hilfs- und/oder Rehabilitationsvorrichtung (B) nach Anspruch 1, wobei der Grundrahmen (110) eine U-Form aufweist, die sich zur Benutzerseite öffnet, und der Hilfsrahmen (130) eine kleinere U-Form als die U-Form des Grundrahmens aufweist und sich zur Assistenzseite öffnet.

3. Adaptive Hilfs- und/oder Rehabilitationsvorrichtung (B) nach Anspruch 1, wobei der Grundrahmen (110) und der Hilfsrahmen (130) so angeordnet sind, dass sie sich nach unten zu einer Fußbodenfläche erstrecken, und wobei die Mitte des Grundrahmens (110) mit dem unteren Gehäuse (150) an einer höheren Position als eine Position gekoppelt ist, wo der Hilfsrahmen (130) mit dem unteren Gehäuse (150) gekoppelt ist.

4. Adaptive Hilfs- und/oder Rehabilitationsvorrichtung (B) nach einem der Ansprüche 1 bis 3, wobei jeweils an den ersten und zweiten Enden des Grundrahmens (110) und des Hilfsrahmens (130) mindestens ein Rad angebracht ist, und das Rad (132), das mit dem Hilfsrahmen (130) gekoppelt ist, größer als das Rad (114) ist, das mit dem Grundrahmen (110) gekoppelt ist.

5. Adaptive Hilfs- und/oder Rehabilitationsvorrichtung (B) nach einem der vorhergehenden Ansprüche, wobei der obere Träger (200) einen Griff für einen Benutzer zum Halten aufweist.

6. Adaptive Hilfs- und/oder Rehabilitationsvorrichtung (B) nach Anspruch 2, wobei die Breite des ersten und zweiten Endes des Hilfsrahmens (130) kleiner als die Breite des ersten und zweiten Endes des Grundrahmens (110) ist.

7. Adaptive Hilfs- und/oder Rehabilitationsvorrichtung (B) nach einem der vorhergehenden Ansprüche, insofern als von Anspruch 3 abhängig, die ferner eine Antriebsanordnung (300) aufweist, die den oberen Träger (200) hält und konfiguriert ist, den oberen Träger (200) anzuheben und abzusenken,
wobei das untere Gehäuse (150) mit der Unterseite der Antriebsanordnung (300) gekoppelt ist, um den oberen Träger (200) und die Antriebsanordnung (300) zu halten.

8. Adaptive Hilfs- und/oder Rehabilitationsvorrichtung (B) nach Anspruch 2, wobei die erste und zweite Mitte der U-Form des Grundrahmens (110) bzw. des Hilfsrahmens (130) mit dem unteren Gehäuse gekoppelt sind, und die zweite Mitte der U-Form des Hilfsrahmens (130) zwischen der ersten Mitte der U-Form des Grundrahmens (110) und dem Ausgleichsgewicht (156) angeordnet ist.

9. Adaptive Hilfs- und/oder Rehabilitationsvorrichtung (B) nach einem der vorhergehenden Ansprüche, insofern als von Anspruch 3 abhängig, wobei der Grundrahmen (110) eine erste und zweite Erweiterung aufweist, um die U-Form zu bilden, wobei die erste Erweiterung des Grundrahmens (110) mit einer dritten Seite des unteren Gehäuses (150) gekoppelt ist und die zweite Erweiterung des Grundrahmens (110) mit einer vierten Seite des unteren Gehäuses (150) gekoppelt ist.

10. Adaptive Hilfs- und/oder Rehabilitationsvorrichtung (B) nach Anspruch 9, wobei der Hilfsrahmen (130) eine erste und zweite Erweiterung aufweist, um die U-Form zu bilden, wobei die erste Erweiterung des Hilfsrahmens (130) mit der dritten Seite des unteren Gehäuses (150) an einer tieferen Position als die erste Erweiterung des Grundrahmens (110) gekoppelt ist, und die zweite Erweiterung des Hilfsrahmens (130) mit der vierten Seite des unteren Gehäuses (150) an einer tieferen Position als die zweite Erweiterung des Grundrahmens (110) gekoppelt ist.

11. Adaptive Hilfs- und/oder Rehabilitationsvorrichtung (B) nach Anspruch 10, wobei das untere Gehäuse (150) eine erste und zweite obere Nut und eine erste und zweite untere Nut aufweist, wobei die erste und zweite Erweiterung des Grundrahmens (110) mit der ersten und zweiten oberen Nut gekoppelt sind, und die erste und zweite Erweiterung des Hilfsrahmens (130) mit der ersten und zweiten unteren Nut gekoppelt sind.

12. Adaptive Hilfs- und/oder Rehabilitationsvorrichtung (B) nach Anspruch 10, wobei die ersten Erweiterungen des Grundrahmens (110) und des Hilfsrahmen (130) jeweils erste Enden aufweisen, die zweiten Erweiterungen des Grundrahmens (110) und des Hilfsrahmens (130) jeweils zweite Enden aufweisen, wobei Räder an den ersten und zweiten Enden des Grundrahmens (110) und des Hilfsrahmens (130) vorgesehen sind, und wobei die Räder, die an den ersten und zweiten Enden des Hilfsrahmens (130) vorgesehen sind, schwerer als die Räder sind, die an den ersten und zweiten Enden des Grundrahmens (110) vorgesehen sind.

13. Hilfs- und/oder Rehabilitationssystem, das eine adaptive Hilfs- und/oder Rehabilitationsvorrichtung (B) nach einem der vorhergehenden Ansprüche und eine tragbare Hilfsvorrichtung aufweist, die durch die adaptive Hilfs- und/oder Rehabilitationsvorrichtung (B) gehalten wird.

## Revendications

1. Dispositif adaptatif d'assistance et/ou de rééducation (B), comprenant :
un support supérieur (200) destiné à supporter un dispositif d'assistance portable sur un côté d'utilisateur ; et
un support inférieur (100) raccordé à un côté inférieur du support supérieur (200) pour déplacer et supporter le support supérieur (200), le support inférieur (100) comprenant un cadre de base (110) s'étendant sur le côté d'utilisateur et un sous-cadre (130) s'étendant sur un côté d'assistant opposé au côté d'utilisateur,
**caractérisé en ce que** ledit dispositif comprend en outre un boîtier inférieur (150) prévu dans le support inférieur (110),
où le boîtier inférieur (150) est raccordé au cadre de base (110) et au sous-cadre (130) pour supporter le cadre de base (110) et le sous-cadre (130), et
où le boîtier inférieur (150) comprend :
une coque extérieure (152) par laquelle le cadre de base (110) et le sous-cadre (130) sont insérés,
une coque intérieure (154) prévue à l'intérieur de la coque extérieure (152), le cadre de base (110) et le sous-cadre (130) étant raccordés à ladite coque intérieure (154), et
un poids d'équilibrage (156) prévu à l'intérieur de la coque extérieure (152) et disposé en dessous, à l'intérieur ou autour de la coque intérieure (154) pour ajouter du poids au support inférieur (100).

2. Dispositif adaptatif d'assistance et/ou de rééducation (B) selon la revendication 1, où le cadre de base (110) a une forme en U ouvert vers le côté d'utilisateur, et le sous-cadre (130) a une forme en U de taille inférieure au U du cadre de base, et ouvert vers le côté d'assistant.

3. Dispositif adaptatif d'assistance et/ou de rééducation (B) selon la revendication 1, où le cadre de base (110) et le sous-cadre (130) sont disposés de manière à s'étendre vers le bas vers la surface du sol, et où le centre du cadre de base (110) est raccordé au boîtier inférieur (150) à un emplacement situé plus haut que l'emplacement de raccordement du sous-cadre (130) au boîtier inférieur (150).

4. Dispositif adaptatif d'assistance et/ou de rééducation (B) selon l'une des revendications 1 à 3, où au moins une roue est installée à la première et à la deuxième extrémités du cadre de base (110) et du sous-cadre (130), et où la roue (132) raccordée au sous-cadre (130) est plus grande que la roue (114) raccordée au cadre de base (110).

5. Dispositif adaptatif d'assistance et/ou de rééducation (B) selon l'une des revendications précédentes, où le support supérieur (200) présente une poignée de préhension par un utilisateur.

6. Dispositif adaptatif d'assistance et/ou de rééducation (B) selon la revendication 2, où la largeur de la première et de la deuxième extrémités du sous-cadre (130) est inférieure à la largeur de la première et de la deuxième extrémités du cadre de base (110).

7. Dispositif adaptatif d'assistance et/ou de rééducation (B) selon l'une des revendications précédentes, si dépendante de la revendication 3, comprenant en outre un ensemble d'entraînement (300) supportant le support supérieur (200) et prévu pour élever et abaisser le support supérieur (200),
le boîtier inférieur (150) étant raccordé à un côté inférieur de l'ensemble d'entraînement (300) pour supporter le support supérieur (200) et l'ensemble d'entraînement (300).

8. Dispositif adaptatif d'assistance et/ou de rééducation (B) selon la revendication 2, où le premier et le deuxième centres des formes en U du cadre de base (110) et du sous-cadre (130), respectivement, sont reliés au boîtier inférieur, et le deuxième centre de la forme en U du sous-cadre (130) est positionné entre le premier centre de la forme en U du cadre de base (110) et le poids d'équilibrage (156).

9. Dispositif adaptatif d'assistance et/ou de rééducation (B) selon l'une des revendications précédentes, si dépendante de la revendication 3, où le cadre de base (110) présente une première et une deuxième extensions réalisant la forme en U, la première extension du cadre de base (110) étant raccordée à un troisième côté du boîtier inférieur (150), et la deuxième extension du cadre de base (110) étant raccordée à un quatrième côté du boîtier inférieur (150).

10. Dispositif adaptatif d'assistance et/ou de rééducation (B) selon la revendication 9, où le sous-cadre (130) présente une première et une deuxième extensions réalisant la forme en U, la première extension du sous-cadre (130) étant raccordée au troisième côté du boîtier inférieur (150) à un emplacement situé plus bas que l'emplacement de raccordement de la première extension du cadre de base (110), et la deuxième extension du sous-cadre (130) est raccordée au quatrième côté du boîtier inférieur (150) à un emplacement situé plus bas que l'emplacement de raccordement de la deuxième extension du cadre de base (110).

11. Dispositif adaptatif d'assistance et/ou de rééducation (B) selon la revendication 10, où le boîtier inférieur (150) présente une première et une deuxième rainures supérieures, et une première et une deuxième rainures inférieures, la première et la deuxième extensions du cadre de base (110) étant raccordées à la première et à la deuxième rainures supérieures, et la première et la deuxième extensions du sous-cadre (130) étant raccordées à la première et à la deuxième rainures inférieures.

12. Dispositif adaptatif d'assistance et/ou de rééducation (B) selon la revendication 10, où les premières extensions du cadre de base (110) et du sous-cadre (130) ont chacune des premières extrémités, les deuxièmes extensions du cadre de base (110) et du sous-cadre (130) ont chacune des deuxièmes extrémités, où des roues sont prévues sur la première et la deuxième extrémités du cadre de base (110) et du sous-cadre (130), et où les roues prévues sur la première et la deuxième extrémités du sous-cadre (130) sont plus lourdes que les roues prévues sur la première et la deuxième extrémités du cadre de base (110).

13. Système d'assistance et/ou de rééducation comprenant un dispositif adaptatif d'assistance et/ou de rééducation (B) selon l'une des revendications précédentes, et un dispositif d'assistance portable supporté par le dispositif adaptatif d'assistance et/ou de rééducation (B).
